(19) Europäisches Patentamt / European Patent Office / Office européen des brevets

(11) **EP 4 770 141 A1**

(12) **EUROPEAN PATENT APPLICATION**
published in accordance with Art. 153(4) EPC

(43) Date of publication:
**01.07.2026 Bulletin 2026/27**

(21) Application number: **24870314.2**

(22) Date of filing: **29.08.2024**

(51) International Patent Classification (IPC):
**H04W 4/02** (2018.01)

(52) Cooperative Patent Classification (CPC):
**H04W 4/02**

(86) International application number:
**PCT/CN2024/115554**

(87) International publication number:
**WO 2025/066768 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.09.2023 CN 202311282447**

(71) Applicant: HUAWEI TECHNOLOGIES CO., LTD.
**Shenzhen 518129 (CN)**

(72) Inventors:
• ZHANG, Heng
  Shenzhen, Guangdong 518129 (CN)
• HUANG, Su
  Shenzhen, Guangdong 518129 (CN)

(74) Representative: **Goddar, Heinz J.**
**Boehmert & Boehmert**
**Anwaltspartnerschaft mbB**
**Pettenkoferstrasse 22**
**80336 München (DE)**

(54) **POSITIONING METHOD, AND APPARATUS, STORAGE MEDIUM AND COMPUTER PROGRAM PRODUCT**

(57)    A positioning method, an apparatus, a storage medium, and a computer program product are provided, and relate to the field of positioning technologies, to improve positioning accuracy. In this application, a first apparatus receives a first signal. The first signal is sent by using a first ARP of a second apparatus. The first apparatus receives a second signal. The second signal is sent by using a second ARP of the second apparatus. The first apparatus determines a first measurement result based on first information, the first signal, and the second signal. The first information indicates a distance between the first ARP and the second ARP. The first measurement result is used to position the first apparatus. Because a bandwidth of a signal is inversely correlated with an error of a measurement result, and an aggregated bandwidth obtained by the first apparatus by performing carrier aggregation on the first signal and the second signal is larger, the first measurement result determined by the first apparatus based on the first signal and the second signal can have a smaller error and higher accuracy, thereby improving positioning accuracy.

FIG. 4

# EP 4 770 141 A1

**Description**

CROSS-REFERENCE TO RELATED APPLICATIONS

This application claims priority to Chinese Patent Application No. 202311282447.8, filed with the China National Intellectual Property Administration on September 27, 2023 and entitled "POSITIONING METHOD, APPARATUS, STORAGE MEDIUM, AND COMPUTER PROGRAM PRODUCT", which is incorporated herein by reference in its entirety.

TECHNICAL FIELD

This application relates to the field of positioning technologies, and in particular, to a positioning method, an apparatus, a storage medium, and a computer program product.

BACKGROUND

With rapid development of communication technologies, high-precision positioning is gradually determined as an important research project in a 5th generation mobile communication system (5th generation mobile networks or 5th generation wireless systems, 5G) of the 3rd generation partnership project (3rd generation partnership project, 3GPP). Scenarios of new radio (New Radio, NR) positioning mainly include: enhanced mobile broadband (enhanced mobile broadband, eMBB) outdoor, eMBB indoor, ultra-reliable low-latency communication (ultra-reliable low-latency communication, URLLC), and massive machine-type communications (massive machine-type communications, mMTC)/internet of things (internet of things, IoT). NR positioning also requires features such as high security, scalability, high availability, and precision assurance in high-speed applications.

In the 3GPP standard, a plurality of positioning technologies such as time of arrival (time of arrival, TOA), time difference of arrival (time difference of arrival, TDOA), angle of departure (angle of departure, AOD), angle of arrival (angle of arrival, AOA), and round trip time (round trip time, RTT) are supported. Positioning technologies may be mainly classified into an uplink positioning technology, a downlink positioning technology, and an uplink/downlink positioning technology. In the uplink positioning technology, a base station may measure a signal sent by a terminal device, to obtain a measurement result. The measurement result may be used to estimate a location of the terminal device. In the downlink positioning technology, a terminal device may measure a signal sent by a base station, to obtain a measurement result. The measurement result may be used to estimate a location of the terminal device. In the uplink/downlink positioning technology, both a terminal device and a base station need to measure a received signal, to obtain a measurement result used for positioning. How to further improve positioning accuracy becomes a problem that needs to be urgently resolved currently.

SUMMARY

Embodiments of this application provide a positioning method, an apparatus, a storage medium, and a computer program product, to determine a measurement result based on a plurality of signals. Because bandwidths of a plurality of signals are larger, and a bandwidth of a signal is inversely correlated with an error of a measurement result, the measurement result has a smaller error and higher accuracy, thereby improving positioning accuracy.

According to a first aspect, an embodiment of this application provides a positioning method. The method may be applied to a first apparatus. The first apparatus may be, for example, a terminal device or a unit, a module, or a chip (system) in the terminal device.

In the method, the first apparatus receives a first signal. The first signal is sent by using a first antenna reference point (antenna reference point, ARP) of a second apparatus. The first apparatus receives a second signal. The second signal is sent by using a second ARP of the second apparatus, and the second ARP is different from the first ARP. The first apparatus determines a first measurement result based on first information, the first signal, and the second signal, where the first information includes information indicating a location of the first ARP and a location of the second ARP. The first measurement result is used for positioning. For example, the first measurement result may be used to position the first apparatus.

When the measurement result is determined based on the first signal and the second signal, the first ARP used to send the first signal and the second ARP used to send the second signal may belong to different antenna panels. If it is considered that the first ARP and the second ARP belong to a same antenna panel, the measurement result determined based on the first signal and the second signal is not accurate. However, in the foregoing solution, because the first information includes the information indicating the location of the first ARP and the location of the second ARP, and the first apparatus determines the first measurement result with reference to the first information, the first signal, and the second signal, accuracy of the first measurement result is higher, thereby improving positioning accuracy.

In a possible implementation, the first signal corresponds to a first positioning frequency layer (positioning frequency layer, PFL), and the second signal corresponds to a second PFL. It may also be understood that a carrier frequency of the first signal is the first PFL, and a carrier frequency of the second signal is the second PFL. A signal on the first PFL may be sent by using the first ARP of the second apparatus, and a signal on the second PFL may be sent by using the second ARP of the second apparatus. It may also be understood that the first PFL and the second PFL are sent through aggregation. The first apparatus may aggregate the signals sent on the first PFL and the second PFL, and then determine the first measurement result based on the two signals. After the signals transmitted on the two PFLs are aggregated, a signal with a larger bandwidth can be obtained. In addition, because a bandwidth of a signal is inversely correlated with an estimated error of a measurement result, the first measurement result determined based on the signal with a larger bandwidth has a smaller error and higher accuracy.

In a possible implementation, the first apparatus performs a compensation operation on the first signal and/or the second signal based on the first information. The first apparatus may compensate for the first signal and/or the second signal based on the first information, and then determine the first measurement result. The first apparatus may alternatively compensate for a channel estimation result of the first signal and/or a channel estimation result of the second signal based on the first information, and then determine the first measurement result. The compensation manner is flexible, and these solutions can improve accuracy of the first measurement result.

In a possible implementation, the first apparatus determines the first measurement result based on at least one of the following: a channel estimation result of a compensated first signal and a channel estimation result of the second signal; a channel estimation result of the first signal and a channel estimation result of a compensated second signal; a channel estimation result of a compensated first signal and a channel estimation result of a compensated second signal; a compensated first signal and the second signal; the first signal and a compensated second signal; or a compensated first signal and a compensated second signal.

In a possible implementation, the first apparatus determines third information based on the first information, where the third information includes a phase difference and/or a delay difference between a signal transmitted through a channel of the first signal and a signal transmitted through a channel of the second signal. The first apparatus performs the compensation operation on the first signal and/or the second signal based on the third information.

Because a spacing between the first ARP and the second ARP has large impact on the phase difference and/or the delay difference between the signal transmitted through the channel of the first signal and the signal transmitted through the channel of the second signal, the solution in which the first apparatus determines the third information based on the first information and then performs the compensation operation based on the third information can improve accuracy of a compensation amount, thereby further improving accuracy of the first measurement result.

In a possible implementation, the first apparatus determines corresponding distance difference information between the channel of the first signal and the channel of the second signal based on the first information. The first apparatus determines the third information based on the distance difference information.

Because the phase difference and/or the delay difference between the signal transmitted through the channel of the first signal and the signal transmitted through the channel of the second signal may be caused by the distance difference between the two channels, according to the solution in which the first apparatus determines the phase difference and/or the delay difference between the two channels with reference to the distance difference information between the two signals, a more accurate phase difference and/or delay difference can be obtained, thereby improving accuracy of the first measurement result, and further improving positioning accuracy.

In a possible implementation, the first apparatus determines distance information between the first ARP and the second ARP based on the first information. The first apparatus obtains second information. The second information includes angle of arrival information of a signal sent by the first apparatus to the second apparatus, and/or angle of departure information of a signal sent by the second apparatus to the first apparatus. The first apparatus determines the distance difference information based on the distance information and the second information.

The corresponding distance difference information between the channel of the first signal and the channel of the second signal is caused by the distance between the first ARP and the second ARP, and there may be a geometric relationship between the distance between the first ARP and the second ARP and the distance difference. Because the first apparatus may determine the distance difference information with reference to the second information, accuracy of the distance difference information can be improved, thereby improving accuracy of the first measurement result, and further improving positioning accuracy.

In a possible implementation, the information indicating the location of the first ARP and the location of the second ARP includes at least one of the following: location information of the first ARP and location information of the second ARP; relative location information of the first ARP and the second ARP; distance information between the first ARP and the second ARP; or information indicating a distance between a second antenna panel and a first antenna panel. The first ARP corresponds to the first antenna panel of the second apparatus, and the second ARP corresponds to the second antenna panel of the second apparatus.

The first information may include information associated with the first ARP and the second ARP, or may include information associated with the first antenna panel and the second antenna panel, making the solution flexible.

In a possible implementation, the information indicating the distance between the second antenna panel and the first antenna panel includes at least one of the following: location information of the first antenna panel and location information of the second antenna panel; relative location information between the first antenna panel and the second antenna panel; distance information between the second antenna panel and the first antenna panel; orientation information of the first antenna panel; orientation information of the second antenna panel; relative orientation information of the first antenna panel and the second antenna panel; contour information of the first antenna panel; or contour information of the second antenna panel.

The first apparatus receives the information associated with these antenna panels (for example, the first antenna panel and the second antenna panel), for example, the location information, the orientation information, or the contour information. The first apparatus may calculate a distance between the first ARP and the second ARP based on the information, and then determine the first measurement result based on the distance information. These solutions can reduce complexity of sending the first information on the second apparatus side, and reduce a requirement on the second apparatus.

In a possible implementation, the contour information of the first antenna panel includes at least one of shape information of the first antenna panel, size information of the first antenna panel, distance information between two antenna elements of the first antenna panel, or distance information between an antenna element of the first antenna panel and an edge of the first antenna panel. In a possible implementation, the contour information of the second antenna panel includes at least one of shape information of the second antenna panel, size information of the second antenna panel, distance information between two antenna elements of the second antenna panel, or distance information between an antenna element of the second antenna panel and an edge of the second antenna panel.

In a possible implementation, the distance information between the first ARP and the second ARP is determined based on at least one of the following: a distance between the first ARP and the second ARP; a distance between an edge of the first antenna panel and an edge of the second antenna panel; a distance between an antenna element on an edge of the first antenna panel and an antenna element on an edge of the second antenna panel; a distance between an antenna element on an edge of the first antenna panel and an edge of the first antenna panel; a distance between an antenna element on an edge of the second antenna panel and an edge of the second antenna panel; a spacing between antenna elements on the first antenna panel; a spacing between antenna elements on the second antenna panel; a side length of the first antenna panel; or a side length of the second antenna panel. This implementation provides a plurality of possible implementations for the first apparatus to determine the distance between the first ARP and the second ARP, thereby improving flexibility of the solution.

In a possible implementation, a time domain resource occupied by the first signal is the same as a time domain resource occupied by the second signal. In this way, it can be ensured that the two signals pass through channels at a same moment, so that the first measurement result determined based on the two signals can be more accurate.

In a possible implementation, a frequency domain resource occupied by the first signal and a frequency domain resource occupied by the second signal are contiguous frequency domain resources in a preset frequency band. This allows for greater compatibility with the conventional technology.

In a possible implementation, the first apparatus sends the first measurement result. The first apparatus may send the first measurement result to another apparatus, for example, a second apparatus or a location management apparatus, so that the second apparatus or the location management apparatus positions the first apparatus.

In a possible implementation, the first apparatus sends first indication information, where the first indication information indicates that the first measurement result is determined based on the first information. The first apparatus may send the first indication information to the location management apparatus. After obtaining the first indication information, the location management apparatus may determine that the first measurement result is determined based on at least one signal or channel estimation result obtained through antenna panel spacing compensation. In this way, the location management apparatus may determine, based on the first indication information, that accuracy or reliability of the first measurement result is higher. Therefore, when the first apparatus is positioned, positioning may be performed based on the measurement result with higher accuracy or reliability, or a larger weight is set for the measurement result with higher accuracy or reliability, thereby improving positioning accuracy.

In a possible implementation, the first apparatus receives the first information. For example, the second apparatus may send the first information to the location management apparatus, and the location management apparatus sends the received first information to the first apparatus. For example, the location management apparatus may send the first information by using a positioning request and information exchange signaling. Alternatively, the second apparatus may send the first information to the first apparatus.

For another example, the first information may alternatively be preconfigured in the first apparatus. For example, the first information may be some preset values configured based on historical experience. Based on these preset values, the first apparatus may compensate for the first signal and/or the second signal, or compensate for the channel estimation result of the first signal and/or the channel estimation result of the second channel, thereby improving estimation accuracy of the first measurement result.

According to a second aspect, an embodiment of this application provides a positioning method. The method may be applied to a second apparatus. The second apparatus may be, for example, a network device or a unit, a module, or a chip (system) in the network device.

The method includes: The second apparatus sends a first signal by using a first ARP. The second apparatus sends a second signal by using a second ARP. The second ARP is different from the first ARP. The second apparatus sends first information. The first information includes information indicating a location of the first ARP and a location of the second ARP. The first information, the first signal, and the second signal are used to determine a first measurement result, and the first measurement result is used for positioning.

Because the second apparatus sends the first information, and the first information includes the information indicating the location of the first ARP and the location of the second ARP, the first apparatus may determine the first measurement result with reference to the first information, the first signal, and the second signal, accuracy of the first measurement result is higher, thereby improving positioning accuracy.

For related descriptions, refer to the related content in the first aspect. Details are not described again.

According to a third aspect, an embodiment of this application provides a positioning method. The method may be applied to a location management apparatus. The location management apparatus may be, for example, a location management device or a unit, a module, or a chip (system) in the location management device.

The location management apparatus receives a first measurement result. The first measurement result is determined based on first information, a first signal, and a second signal. The first signal is sent by using a first ARP of a second apparatus, the second signal is sent by using a second ARP of the second apparatus, the second ARP is different from the first ARP, and the first information includes information indicating a location of the first ARP and a location of the second ARP. The location management apparatus performs positioning based on the first measurement result.

Because the first measurement result is determined with reference to the first information, the first signal, and the second signal, and the first information includes the information indicating the location of the first ARP and the location of the second ARP, accuracy of the first measurement result is high. Therefore, positioning accuracy can be improved by performing positioning by the location management apparatus based on the first measurement result.

In a possible implementation, the location management apparatus receives first indication information. The first indication information indicates that the first measurement result is determined based on the first information. For related descriptions, refer to the related content in the first aspect. Details are not described again.

According to a fourth aspect, an embodiment of this application provides a positioning method. The method may be applied to a second apparatus. The second apparatus may be, for example, a network device or a unit, a module, or a chip (system) in the network device.

The second apparatus receives a third signal from a first apparatus by using a third ARP. The second apparatus receives a fourth signal from the first apparatus by using a fourth ARP. The fourth ARP is different from the third ARP. The second apparatus determines a second measurement result based on fourth information, the third signal, and the fourth signal, where the fourth information includes information indicating a location of the third ARP and a location of the fourth ARP, and the second measurement result is used to position the first apparatus.

When the measurement result is determined based on the third signal and the fourth signal, the third ARP used to receive the third signal and the fourth ARP used to receive the fourth signal may belong to different antenna panels. If it is considered that the third ARP and the fourth ARP belong to a same antenna panel, the measurement result determined based on the third signal and the fourth signal is not accurate. However, in the foregoing solution, because the fourth information includes the information indicating the location of the third ARP and the location of the fourth ARP, and the second apparatus determines the second measurement result with reference to the fourth information, the third signal, and the fourth signal, accuracy of the second measurement result is higher, thereby improving positioning accuracy.

In a possible implementation, the third signal corresponds to a first carrier (component carrier, CC), and the fourth signal corresponds to a second CC. The first CC may be understood as a carrier of the third signal, and the second CC may be understood as a carrier of the fourth signal. A signal on the first CC may be received by using the third ARP of the second apparatus, and a signal on the second CC may be received by using the fourth ARP of the second apparatus. It may also be understood that the first CC and the second CC are sent through aggregation. The second apparatus may aggregate the signals sent on the first CC and the second CC, and then determine the second measurement result based on the two signals. After the signals transmitted on the two CCs are aggregated, a signal with a larger bandwidth can be obtained. In addition, because a bandwidth of a signal is inversely correlated with an estimated error of a measurement result, the second measurement result determined based on the signal with a larger bandwidth has a smaller error and higher accuracy.

In a possible implementation, the second apparatus performs a compensation operation on the third signal and/or the fourth signal based on the fourth information. For example, the second apparatus may compensate for the third signal and/or the fourth signal based on the fourth information, and then determine the second measurement result. The second apparatus may alternatively compensate for a channel estimation result of the third signal and/or a channel estimation result of the fourth signal based on the fourth information, and then determine the second measurement result. The compensation manner is flexible, and these solutions can improve accuracy of the second measurement result.

In a possible implementation, the second apparatus determines the second measurement result based on at least one of the following: a channel estimation result of a compensated third signal and a channel estimation result of the fourth signal; a channel estimation result of the third signal and a channel estimation result of a compensated fourth signal; a channel estimation result of a compensated third signal and a channel estimation result of a compensated fourth signal; a compensated third signal and the fourth signal; the third signal and a compensated fourth signal; or a compensated third signal and a compensated fourth signal.

In a possible implementation, the second apparatus determines sixth information based on the fourth information, where the sixth information includes a phase difference and/or a delay difference between a signal transmitted through a channel of the third signal and a signal transmitted through a channel of the fourth signal. The second apparatus performs the compensation operation on the third signal and/or the fourth signal based on the sixth information.

Because a spacing between the third ARP and the fourth ARP has large impact on the phase difference and/or the delay difference between the signal transmitted through the channel of the third signal and the signal transmitted through the channel of the fourth signal, the solution in which the second apparatus determines the sixth information based on the fourth information and then performs the compensation operation based on the sixth information can improve accuracy of a compensation amount, thereby further improving accuracy of the second measurement result.

In a possible implementation, the second apparatus determines corresponding distance difference information between the channel of the third signal and the channel of the fourth signal based on at least the fourth information. The second apparatus determines the sixth information based on the distance difference information.

Because the phase difference and/or the delay difference between the signal transmitted through the channel of the third signal and the signal transmitted through the channel of the fourth signal may be caused by the distance difference between the two channels, according to the solution in which the second apparatus determines the phase difference and/or the delay difference between the two channels with reference to the distance difference information between the two signals, a more accurate phase difference and/or delay difference can be obtained, thereby improving accuracy of the second measurement result, and further improving positioning accuracy.

In a possible implementation, the second apparatus determines distance information between the third ARP and the fourth ARP based on the fourth information. The second apparatus obtains fifth information, where the fifth information includes angle of arrival information of a signal sent by the first apparatus to the second apparatus, and/or angle of departure information of a signal sent by the second apparatus to the first apparatus. The second apparatus determines the distance difference information based on the distance information and the fifth information.

The corresponding distance difference information between the channel of the third signal and the channel of the fourth signal is caused by the distance between the third ARP and the fourth ARP, and there may be a geometric relationship between the distance between the third ARP and the fourth ARP and the distance difference. Because the second apparatus may determine the distance difference information with reference to the fifth information, accuracy of the distance difference information can be improved, thereby improving accuracy of the second measurement result, and further improving positioning accuracy.

In a possible implementation, the information indicating the location of the third ARP and the location of the fourth ARP includes at least one of the following: location information of the third ARP and location information of the fourth ARP; relative location information of the third ARP and the fourth ARP; distance information between the third ARP and the fourth ARP; or information indicating a distance between a fourth antenna panel and a third antenna panel, where the third ARP corresponds to the third antenna panel of the second apparatus, and the fourth ARP corresponds to the fourth antenna panel of the second apparatus. The fourth information may include information associated with the third ARP and the fourth ARP, or may include information associated with the third antenna panel and the fourth antenna panel, making the solution flexible.

In a possible implementation, the information indicating the distance between the fourth antenna panel and the third antenna panel includes at least one of the following: location information of the third antenna panel and location information of the fourth antenna panel; relative location information between the third antenna panel and the fourth antenna panel; distance information between the fourth antenna panel and the third antenna panel; orientation information of the third antenna panel; orientation information of the fourth antenna panel; relative orientation information of the third antenna panel and the fourth antenna panel; contour information of the third antenna panel; or contour information of the fourth antenna panel.

The second apparatus may receive the information associated with these antenna panels (for example, the third antenna panel and the fourth antenna panel), for example, the location information, the orientation information, or the contour information. The second apparatus may calculate a distance between the third ARP and the fourth ARP based on the information, and then determine the second measurement result based on the distance information. These solutions can reduce complexity of obtaining the fourth information by the second apparatus, and reduce a requirement on the second apparatus.

In a possible implementation, the contour information of the third antenna panel includes at least one of shape information of the third antenna panel, size information of the third antenna panel, distance information between two antenna elements of the third antenna panel, or distance information between an antenna element of the third antenna panel and an edge of the third antenna panel.

In a possible implementation, the contour information of the fourth antenna panel includes at least one of shape information of the fourth antenna panel, size information of the fourth antenna panel, distance information between two antenna elements of the fourth antenna panel, or distance information between an antenna element of the fourth antenna panel and an edge of the fourth antenna panel.

In a possible implementation, the distance information between the third antenna panel and the fourth antenna panel is determined based on at least one of the following: a distance between the third ARP and the fourth ARP; a distance between an edge of the third antenna panel and an edge of the fourth antenna panel; a distance between an antenna element on an edge of the third antenna panel and an antenna element on an edge of the fourth antenna panel; a distance between an antenna element on an edge of the third antenna panel and an edge of the third antenna panel; a distance between an antenna element on an edge of the fourth antenna panel and an edge of the fourth antenna panel; a spacing between antenna elements on the third antenna panel; a spacing between antenna elements on the fourth antenna panel; a side length of the third antenna panel; or a side length of the fourth antenna panel. This implementation provides a plurality of possible implementations for the second apparatus to determine the distance between the third ARP and the fourth ARP, thereby improving flexibility of the solution.

In a possible implementation, a time domain resource occupied by the third signal is the same as a time domain resource occupied by the fourth signal. In this way, it can be ensured that the two signals pass through channels at a same moment, so that the second measurement result determined based on the two signals can be more accurate.

In a possible implementation, a frequency domain resource occupied by the third signal and a frequency domain resource occupied by the fourth signal are contiguous frequency domain resources in a preset frequency band. This allows for greater compatibility with the conventional technology.

In a possible implementation, the second apparatus sends the second measurement result. The second apparatus may send the second measurement result to another apparatus, for example, a location management apparatus, so that the location management apparatus performs positioning.

In a possible implementation, the second apparatus sends second indication information, where the second indication information indicates that the second measurement result is determined based on the fourth information. The second apparatus may send the second indication information to the location management apparatus. After obtaining the second indication information, the location management apparatus may determine that the second measurement result is determined based on at least one signal or channel estimation result obtained through antenna panel spacing compensation. In this way, the location management apparatus may determine, based on the second indication information, that accuracy or reliability of the second measurement result is higher. Therefore, when the second measurement result is used for positioning (for example, positioning the first apparatus), positioning may be performed based on the measurement result with higher accuracy or reliability, or a larger weight is set for the measurement result with higher accuracy or reliability, thereby improving positioning accuracy.

According to a fifth aspect, an embodiment of this application provides a positioning method. The method may be applied to a location management apparatus. The location management apparatus may be, for example, a location management device or a unit, a module, or a chip (system) in the location management device.

The location management apparatus receives a second measurement result. The second measurement result is determined based on fourth information, a third signal, and a fourth signal, the third signal is received by using a third ARP of a second apparatus, the fourth signal is received by using a fourth ARP of the second apparatus, the fourth ARP is different from the third ARP, and the fourth information includes information indicating a location of the third ARP and a location of the fourth ARP. The location management apparatus performs positioning based on a first measurement result.

Because the second measurement result is determined with reference to the fourth information, the third signal, and the fourth signal, and the fourth information includes the information indicating the location of the third ARP and the location of the fourth ARP, accuracy of the second measurement result is higher. Therefore, positioning accuracy can be improved by performing positioning by the location management apparatus based on the second measurement result.

In a possible implementation, the location management apparatus receives second indication information. The second indication information indicates that the second measurement result is determined based on the fourth information. For related descriptions, refer to the related content in the fourth aspect. Details are not described again.

According to a sixth aspect, a communication apparatus is provided. The communication apparatus may be the foregoing first apparatus, second apparatus, or location management apparatus. The communication apparatus may include a communication unit and a processing unit, to perform any one of the first aspect to the fifth aspect or any one of the possible implementations of the first aspect to the fifth aspect. The communication unit is configured to perform functions related to sending and receiving. Optionally, the communication unit includes a receiving unit and a sending unit. In a design, the communication apparatus is a communication chip, the processing unit may be one or more processors or processor cores, and the communication unit may be an input/output circuit or a port of the communication chip.

In another design, the communication unit may be a transmitter and a receiver, or the communication unit may be a transmitter device and a receiver device.

Optionally, the communication apparatus further includes modules that can be configured to perform any one of the first aspect to the fifth aspect or any one of the possible implementations of the first aspect to the fifth aspect.

According to a seventh aspect, a communication apparatus is provided. The communication apparatus may be the foregoing first apparatus, second apparatus, or location management apparatus. The communication apparatus may include a processor and a memory, to perform any one of the first aspect to the fifth aspect or any one of the possible implementations of the first aspect to the fifth aspect. Optionally, communication apparatus further includes a transceiver. The memory is configured to store a computer program or instructions. The processor is configured to invoke the computer program or the instructions from the memory and run the computer program or the instructions. When the processor executes the computer program or the instructions in the memory, the communication apparatus is enabled to perform any one of the first aspect to the fifth aspect or any one of the possible implementations of the first aspect to the fifth aspect.

Optionally, there are one or more processors, and there are one or more memories.

Optionally, the memory may be integrated with the processor, or the memory and the processor are disposed separately.

Optionally, the transceiver may include a transmitter device (transmitter) and a receiver device (receiver).

According to an eighth aspect, a communication apparatus is provided. The communication apparatus may be the foregoing first apparatus, second apparatus, or location management apparatus. The communication apparatus may include a processor, to perform any one of the first aspect to the fifth aspect or any one of the possible implementations of the first aspect to the fifth aspect. The processor is coupled to a memory. Optionally, the communication apparatus further includes the memory. Optionally, the communication apparatus further includes a communication interface, and the processor is coupled to the communication interface.

In an implementation, when the communication apparatus is the first apparatus, the second apparatus, or the location management apparatus, the communication interface may be a transceiver or an input/output interface. Optionally, the transceiver may be a transceiver circuit. Optionally, the input/output interface may be an input/output circuit.

In another implementation, when the communication apparatus is a chip or a chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to a ninth aspect, a system is provided. The system includes the foregoing first apparatus.

In a possible implementation, the system may further include one or more second apparatuses. In another possible implementation, the system may further include a location management apparatus.

According to a tenth aspect, a computer program product is provided. The computer program product includes a computer program. When the computer program is run, a computer is enabled to perform any one of the first aspect to the fifth aspect or any one of the possible implementations of the first aspect to the fifth aspect.

According to an eleventh aspect, a computer-readable storage medium is provided. The computer-readable medium stores a computer program (which may also be referred to as code or instructions). When the computer program is run on a computer, the computer is enabled to perform any one of the first aspect to the fifth aspect or any one of the possible implementations of the first aspect to the fifth aspect.

According to a twelfth aspect, a chip system is provided. The chip system may include a processor. The processor is coupled to a memory, and may be configured to perform any one of the first aspect to the fifth aspect or any one of the possible implementations of the first aspect to the fifth aspect. Optionally, the chip system further includes the memory. The memory is configured to store a computer program (which may also be referred to as code or instructions). The processor is configured to invoke the computer program from the memory and run the computer program, so that a device in which the chip system is installed performs any one of the first aspect to the fifth aspect or any one of the possible implementations of the first aspect to the fifth aspect.

According to a thirteenth aspect, a processing apparatus is provided, including an interface circuit and a processing circuit. The interface circuit may include an input circuit and an output circuit. The processing circuit is configured to receive a signal through the input circuit, and transmit a signal through the output circuit, so that any one of the first aspect to the fifth aspect or any one of the possible implementations of the first aspect to the fifth aspect is implemented.

In a specific implementation process, the processing apparatus may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and various circuits are not limited in this application.

In an implementation, the communication apparatus is a first apparatus, a second apparatus, or a location management apparatus. The interface circuit may be a radio frequency processing chip in the first apparatus, the second apparatus, or the location management apparatus, and the processing circuit may be a baseband processing chip in the first apparatus, the second apparatus, or the location management apparatus.

In another implementation, the communication apparatus may be a part of component in the first apparatus, the second apparatus, or the location management apparatus, for example, an integrated circuit product such as a system chip or a communication chip. The interface circuit may be an input/output interface, an interface circuit, an output circuit, an input circuit, a pin, a related circuit, or the like on the chip or the chip system. The processing circuit may be a logic circuit on the chip.

BRIEF DESCRIPTION OF DRAWINGS

FIG. 1 is a diagram of an architecture of a communication system according to an embodiment of this application;

FIG. 2A is a diagram of an architecture of another communication system according to an embodiment of this application;

FIG. 2B is a diagram of an architecture of another communication system to which an embodiment of this application is applicable;

FIG. 2C is a diagram of an architecture of another communication system to which an embodiment of this application is applicable;

FIG. 2D is a diagram of an architecture of another communication system to which an embodiment of this application is applicable;

FIG. 3 is a diagram of an architecture of another communication system to which an embodiment of this application is applicable;

FIG. 4 is a schematic flowchart of a positioning method according to an embodiment of this application;

FIG. 5 is a schematic flowchart of a measurement result determining method according to an embodiment of this application;

FIG. 6A is a possible diagram of a structure of a plurality of antenna panels on a second apparatus according to an embodiment of this application;

FIG. 6B is another possible diagram of a structure of a plurality of antenna panels on a second apparatus according to an embodiment of this application;

FIG. 7 is a diagram of an architecture of another communication system according to an embodiment of this application;

FIG. 8 is a schematic flowchart of a positioning method according to an embodiment of this application;

FIG. 9 is a schematic flowchart of a measurement result determining method according to an embodiment of this application;

FIG. 10 is a diagram of a structure of a communication apparatus according to an embodiment of this application; and

FIG. 11 is a diagram of a structure of a communication apparatus according to an embodiment of this application.

DESCRIPTION OF EMBODIMENTS

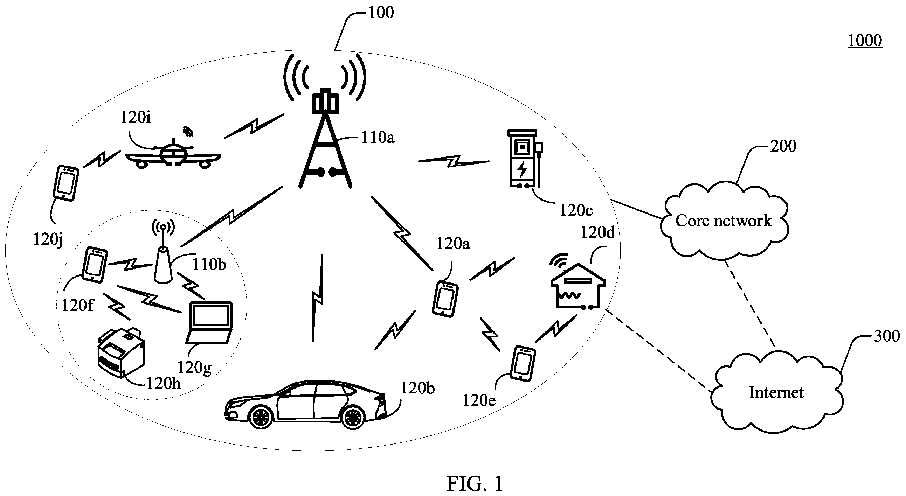

FIG. 1 is an example of a diagram of an architecture of a communication system 1000 to which an embodiment of this application is applicable. As shown in FIG. 1, the communication system includes a radio access network 100 and a core network 200. Optionally, the communication system 1000 may further include an internet 300. The radio access network 100 may include at least one radio access network device (for example, 110a and 110b in FIG. 1), and may further include at least one terminal device (for example, 120a to 120j in FIG. 1). The terminal device is connected to the radio access network device in a wireless manner, and the radio access network device is connected to a core network in a wireless or wired manner. A core network device and the radio access network device may be different independent physical devices, or functions of the core network device and logical functions of the radio access network device may be integrated into a same physical device, or some functions of the core network device and some functions of the radio access network device may be integrated into one physical device. A wired or wireless manner may be used for connection between terminal devices and between radio access network devices. FIG. 1 is merely a diagram. The communication system may further include other network devices, for example, a wireless relay device and a wireless backhaul device, which are not shown in FIG. 1.

The network device in embodiments of this application includes, for example, a radio access network (radio access network, RAN) device. The radio access network device may be a base station (base station), an evolved NodeB (evolved NodeB, eNodeB), a transmission reception point (transmission reception point, TRP), a transmission point (transmission point, TP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like; or may be a module or a unit that completes some functions of the base station, for example, a central unit (central unit, CU) or a distributed unit (distributed unit, DU). The CU herein completes functions of the radio resource control protocol and the packet data convergence protocol (packet data convergence protocol, PDCP) of the base station, and may further complete functions of the service data adaptation protocol (service data adaptation protocol, SDAP). The DU completes functions of a radio link control layer and a medium access control (medium access control, MAC) layer of the base station, and may further complete some or all functions of a physical layer. For specific descriptions of the foregoing protocol layers, refer to technical specifications related to the 3rd generation partnership project (3rd generation partnership project, 3GPP).

The radio access network device may be a macro base station (for example, 110a in FIG. 1), or may be a micro base station or an indoor base station (for example, 110b in FIG. 1), or may be a relay node or a donor node. A specific technology and a specific device form that are used by the radio access network device are not limited in embodiments of this application. For ease of description, the following provides descriptions by using an example in which the radio access network device is the base station.

The terminal device may also be referred to as a terminal device, a user equipment (user equipment, UE), a mobile station, a mobile terminal device, or the like. The terminal device may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, self-driving, telemedicine, smart grid, smart furniture, smart office, smart wearable, smart transportation, and smart city. The terminal device may be a mobile phone, a tablet computer, a computer having a wireless transceiver function, a wearable device, a vehicle, an uncrewed aerial vehicle, a helicopter, an airplane, a ship, a robot, a robotic arm, a smart home device, a sensor, or the like. A specific technology and a specific device form that are used by the terminal device are not limited in embodiments of this application.

The terminal device may establish a connection to a carrier network through an interface (for example, N1) provided by the carrier network, and use a service such as data and/or voice provided by the carrier network. The terminal device may further access a domain name system (domain name system, DNS) over the carrier network, and use a carrier service deployed on the DNS and/or a service provided by a third party. The third party may be a service party except the carrier network and the terminal device, and may provide a service such as data and/or voice for the terminal device. A specific representation form of the third party may be specifically determined based on an actual application scenario, and is not limited herein.

The terminal device may also be referred to as a terminal device, a user equipment (user equipment, UE), a mobile station, a mobile terminal device, or the like. The terminal device may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, self-driving, telemedicine, smart grid, smart furniture, smart office, smart wearable, smart transportation, and smart city. The terminal device may be a mobile phone, a tablet computer, a computer having a wireless transceiver function, a wearable device, a vehicle, an uncrewed aerial vehicle, a helicopter, an airplane, a ship, a robot, a robotic arm, a smart home device, a roadside unit (roadside unit, RSU), or the like. A specific technology and a specific device form that are used by the terminal device are not limited in embodiments of this application.

The base station and the terminal device may be fixed or mobile. The base station and the terminal device each may be deployed on the land, including an indoor device, an outdoor device, a handheld device, or a vehicle-mounted device; may be deployed on the water; or may be deployed on an airplane, a balloon, and an artificial satellite in the air. Application scenarios of the base station and the terminal device are not limited in embodiments of this application.

Roles of the base station and the terminal device may be relative. For example, a helicopter or an uncrewed aerial vehicle 120i in FIG. 1 may be configured as a mobile base station, and for those terminal devices 120j accessing the radio access network 100 by 120i, the terminal device 120i is a base station. However, for the base station 110a, 120i is a terminal device. In other words, communication between 110a and 120i is performed based on a wireless air interface protocol. Certainly, communication between 110a and 120i may alternatively be performed based on an interface protocol between base stations. In this case, for 110a, 120i is also a base station. Therefore, the base station and the terminal device may be collectively referred to as a communication apparatus, 110a and 110b in FIG. 1 may be referred to as a communication apparatus having a function of a base station, and 120a to 120j in FIG. 1 may be referred to as a communication apparatus having a function of a terminal device.

Communication between a base station and a terminal device, between base stations, or between terminal devices may be performed by using a licensed spectrum, or may be performed by using an unlicensed spectrum, or may be performed by using both a licensed spectrum and an unlicensed spectrum. Communication may be performed by using a spectrum below 6 gigahertz (gigahertz, GHz), or may be performed by using a spectrum above 6 GHz, or may be performed by using both a spectrum below 6 GHz and a spectrum above 6 GHz. A spectrum resource used for wireless communication is not limited in embodiments of this application.

In embodiments of this application, the function of the base station may be performed by a module (for example, a chip) in the base station, or may be performed by a control subsystem including the function of the base station. The control subsystem including the function of the base station herein may be a control center in the foregoing application scenarios, such as smart grid, industrial control, smart transportation, and smart city. The function of the terminal device may alternatively be performed by a module (for example, a chip or a modem) in the terminal device, or may be performed by an apparatus including a function of the terminal device.

In this application, the base station sends a downlink signal or downlink information to the terminal device, where the downlink information is carried on a downlink channel; and the terminal device sends an uplink signal or uplink information to the base station, where the uplink information is carried on an uplink channel. To communicate with the base station, the terminal device needs to establish a wireless connection to a cell controlled by the base station. The cell that establishes the wireless connection to the terminal device is referred to as a serving cell of the terminal device. When communicating with the serving cell, the terminal device is further susceptible to interference from a signal from a neighbor cell.

The core network in embodiments of this application may include a network device that processes and forwards signaling and data of a user. For example, the core network includes core network devices such as an access and mobility management function (access and mobility management function, AMF), a session management function (session management function, SMF), a user plane gateway, and a location management device. The user plane gateway may be a server that has functions such as mobility management, routing, and forwarding specific to user plane data, and is generally located on a network side, for example, a serving gateway (serving gateway, SGW), a packet data network gateway (packet data network gateway, PGW), or a user plane function (user plane function, UPF) entity. The AMF and the SMF are equivalent to a mobility management entity (mobility management entity, MME) in a long term evolution (long term evolution, LTE) system. The AMF is mainly responsible for admission, and the SMF is mainly responsible for session management. Certainly, the core network may also include other network elements, which are not listed one by one herein.

The location management device has a positioning function. The location management device in embodiments of this application may include a location management function (location management function, LMF) or a location management component (location management component, LMC), or may be a local location management function (local location management function, LLMF) located in the network device, or may be a location server. This is not limited in embodiments of this application. For ease of description, the following embodiments are described by using an example in which the location management device is the LMF.

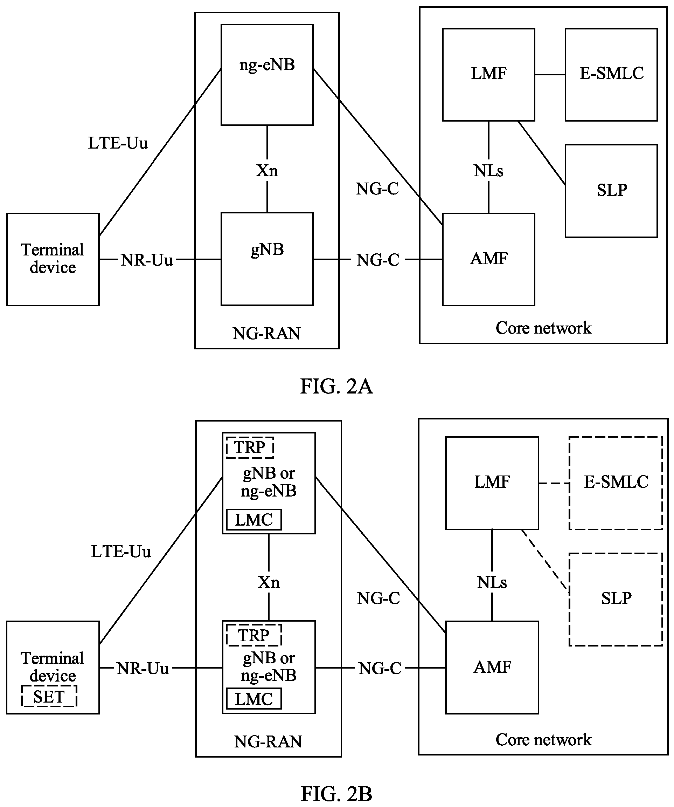

Based on the content shown in FIG. 1, FIG. 2A is an example of a diagram of an architecture of a communication system to which an embodiment of this application is applicable. The communication system is shown by using positioning architectures in LTE and NR Rel-16 as an example. As shown in FIG. 2A, network elements/modules mainly include three parts: a next generation radio access network (next generation radio access network, NG RAN), a terminal device, and a core network.

The core network includes a location management function (location management function, LMF), an access and mobility management function (access and mobility management function, AMF), a service location protocol (service location protocol, SLP), an evolved serving mobile location center (evolved serving mobile location center, E-SMLC), and the like. A location server, namely, the location management function (location management function, LMF), is connected to the AMF, and the LMF and the AMF are connected through an NLs interface. A UE communicates with a serving base station through a Uu link. An ng-eNB is an LTE base station, and a gNB is an NR base station. Base stations communicate with each other through an Xn interface. The base station communicates with the AMF through an NG-C interface. The access and mobility management function (Access and Mobility Management Function, AMF) is equivalent to a router for communication between the gNB and the LMF. The LMF estimates a location of the UE, and the AMF communicates with the LMF through an NLs interface. The LMF is responsible for supporting different types of location services related to the terminal device, including positioning the terminal device and transferring assistance data to the terminal device. The LMF may perform positioning calculation on the terminal device based on a measurement result of another network element. The AMF may receive a terminal device-related location service request from a 5th generation core network location service (5th generation core network location service, 5GC LCS) entity, or the AMF may start some location services on behalf of a specific terminal device, and forward the location service request to the LMF. After obtaining location information returned by the terminal device, the AMF returns the related location information to the 5GC LCS entity.

The NG RAN may include a next generation NodeB (next generation NodeB, gNB), a next generation evolved NodeB (next generation evolved NodeB, ng-eNB), and the like. The gNB and the ng-eNB are connected through an Xn interface, and the LMF and the ng-eNB/gNB are connected through an NG-C interface.

One or more network devices on the NG RAN side configure a resource used to send a reference signal, and send the reference signal to the terminal device. The terminal device measures a downlink signal such as the reference signal, and feeds back a measurement result to the LMF, to support positioning. It should be understood that the reference signal is used for positioning, and may also be referred to as a positioning reference signal. Therefore, the positioning reference signal may be a PRS, a cell-common reference signal (common reference signal, CRS), a channel state information (channel state information, CSI)-RS, or the like. In a possible implementation, a PRS resource may be configured at a cell level, that is, a PRS resource is configured for each cell. After the terminal device re-establishes a radio resource control (radio resource control, RRC) connection with a target cell, a base station of the target cell may configure a PRS resource for the target cell, and the terminal device obtains the PRS resource configured for the target cell, to receive and measure a PRS on the PRS resource.

A communication method provided in embodiments of this application may be applied to various communication systems, for example, an LTE system, a 5th generation (5th generation, 5G) system such as NR, and a next generation communication system such as a 6G system. Certainly, the technical solutions in embodiments of this application may also be applied to another communication system, provided that the communication system has a positioning requirement for a terminal device. In addition, the communication system is further applicable to a future-oriented communication technology. The system described in embodiments of this application is intended to describe the technical solutions in embodiments of this application more clearly, and constitutes no limitation on the technical solutions provided in embodiments of this application. A person of ordinary skill in the art may learn that with evolution of a network architecture, the technical solutions provided in embodiments of this application are also applicable to similar technical problems.

FIG. 2B shows a network architecture of another communication system to which an embodiment of this application is applicable. The communication system includes a core network, an NG-RAN, and a terminal device. The core network includes network elements/modules such as an LMF, an AMF, a secure user plane location (secure user plane location, SUPL) location platform (SUPL location platform, SLP), and an enhanced serving mobile location center (enhanced serving mobile location center, E-SMLC). The NG RAN includes network elements/modules such as a gNB and an ng-eNB. For specific functions of the network elements/modules such as the LMF, the AMF, the SLP, the E-SMLC, the gNB, and the ng-eNB and connection relations between the network elements/modules, refer to the descriptions of the related part in FIG. 2A. Details are not described herein again.

A difference from FIG. 2A lies in that, in the network architecture shown in FIG. 2B, an LMC is added to the NG-RAN, and the LMC is specifically disposed in a base station, for example, disposed in the gNB or the ng-eNB. In the network architecture, the LMC serves as an internal function of the base station. Therefore, no new interface needs to be introduced. The LMC may undertake some functions of the LMF. In the architecture, the gNB may not report a measurement result of a signal used for positioning to the LMF in the core network, thereby reducing signaling overheads and reducing a positioning delay.

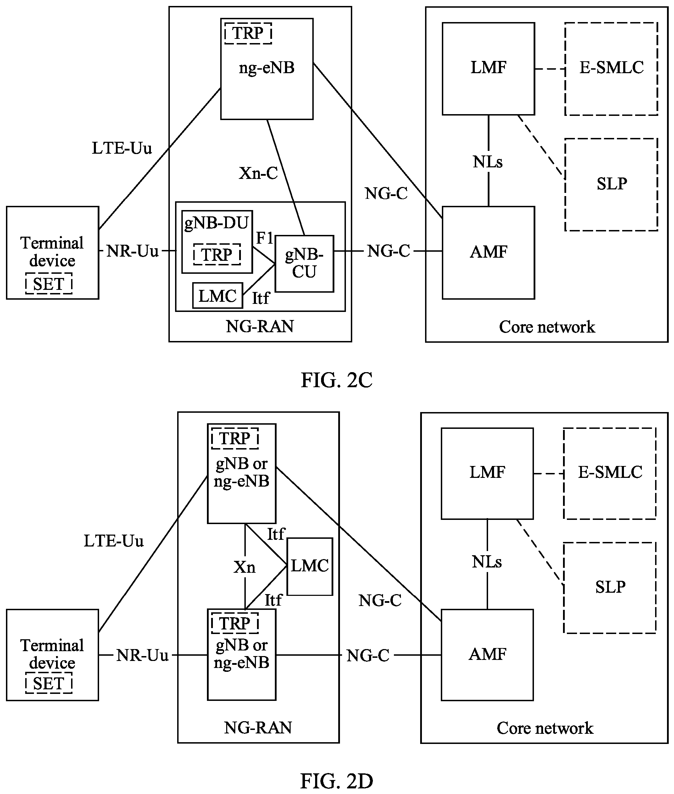

FIG. 2C shows a network architecture of another communication system to which an embodiment of this application is applicable. As shown in FIG. 2C, the communication system also includes a core network, an NG-RAN, and a terminal device. A difference from FIG. 2B lies in that, in the network architecture shown in FIG. 2C, an LMC serves as an independent logical node in the NG-RAN, and is connected to a base station through a new interface. For example, in FIG. 2C, the LMC is connected to a gNB-CU through an interface Itf.

FIG. 2D shows a network architecture of another communication system to which an embodiment of this application is applicable. As shown in FIG. 2D, the communication system also includes a core network, an NG-RAN, and a terminal device. An LMC serves as an independent logical node in the NG-RAN. A difference from FIG. 2C lies in that, in FIG. 2D, the LMC may be connected to a plurality of base stations through new interfaces. In FIG. 2D, an example in which the LMC is connected to two base stations is used. During specific implementation, the LMC may alternatively be connected to more base stations.

It should be understood that FIG. 2A, FIG. 2B, FIG. 2C, and FIG. 2D are examples for describing the communication systems to which embodiments of this application are applicable, and do not specifically limit types, quantities, connection manners, and the like of network elements included in the communication systems to which this application is applicable. In addition, the network elements/modules shown by dashed lines in FIG. 2A, FIG. 2B, FIG. 2C, and FIG. 2D are not mandatory, but are optional. For example, the E-SMLC or the SLP is not mandatory. Alternatively, the network elements/modules shown by dashed lines are in another existence form. For example, the gNB or the ng-eNB is also referred to as a transmission reception point node (transmission reception point, TRP) in some embodiments, and the terminal device is referred to as an SUPL enabled terminal (SUPL enabled terminal, SET) in some embodiments, where SUPL is short for secure user plane location (secure user plane location, SUPL).

The following first describes nouns or terms in embodiments of this application.

(1) Signal used for positioning.

A first signal, a second signal, a third signal, and a fourth signal in embodiments of this application may be understood as signals that can be used for positioning. The first signal, the second signal, the third signal, and the fourth signal in embodiments of this application may also be referred to as positioning signals. For differentiation, for example, the first signal may be referred to as a first positioning signal, and the second signal may be referred to as a second positioning signal.

One or more of the first signal, the second signal, the third signal, and the fourth signal in embodiments of this application may be a positioning reference signal (positioning reference signal, PRS), or may be a sounding reference signal (sounding reference signal, SRS), or may be one or more of a channel state information reference signal (channel state information reference signal, CSI-RS), a demodulation reference signal (demodulation reference signal, DMRS), a phase-tracking reference signal (phase-tracking reference signal, PTRS), a sidelink positioning reference signal (sidelink positioning reference signal, SL-PRS), and a synchronization signal and physical sidelink broadcast channel block (synchronization signal and physical sidelink broadcast channel block, SSB).

(2) Frequency band (band).

According to a specific rule, the 3GPP divides an entire radio spectrum into frequency bands corresponding to a specific range of spectrum in ascending order. The frequency band in embodiments of this application may also be replaced with a band. Table 1 provides examples of band division in a frequency range 1 (frequency range 1, FR-1). In the FR-1 range, a maximum bandwidth of a single carrier is 100 megahertz (megahertz, MHz).

Table 1 Examples of band division in FR-1

| NR frequency band | Uplink frequency band | Downlink frequency band |
| --- | --- | --- |
| n1 | 1920 megahertz (mega hertz, MHz) - 1980 MHz | 2110 MHz - 2170 MHz |
| n2 | 1850 MHz - 1910 MHz | 1930 MHz - 1990 MHz |
| n3 | 1710 MHz - 1785 MHz | 1805 MHz - 1880 MHz |
| n5 | 824 MHz - 849 MHz | 869 MHz - 894 MHz |
| n7 | 2500 MHz - 2570 MHz | 2620 MHz - 2690 MHz |

(3) PFL.

In embodiments of this application, a signal used for positioning may correspond to a PFL. The PFL may also be understood as a carrier frequency of a signal. For example, a second apparatus sends a first signal and a second signal to a first apparatus. The first signal and the second signal may be, for example, downlink signals. The first signal may correspond to a first PFL, and the second signal may correspond to a second PFL. The first PFL is different from the second PFL. The first PFL and the second PFL may be PFLs to which carrier aggregation is applied. For example, the first PFL and the second PFL may be carriers corresponding to different cells that participate in carrier aggregation.

(4) CC.

In embodiments of this application, a signal used for positioning may correspond to a CC. The CC may also be understood as a carrier frequency of a signal. For example, a first apparatus sends a third signal and a fourth signal to a second apparatus. The third signal and the fourth signal may be, for example, uplink signals. The third signal may correspond to a first CC, the fourth signal may correspond to a second CC, and the first CC is different from the second CC. The first CC and the second CC may be CCs to which carrier aggregation is applied. For example, the first CC and the second CC may be carriers corresponding to different cells that participate in carrier aggregation.

(5) Carrier aggregation.

To provide a higher service rate, the 3rd generation partnership project (3rd generation partnership project, 3GPP) requires a downlink rate of 1 gigabit per second (Gigabit per second, Gbit/s) in the long term evolution advanced (long term evolution advanced, LTE-Advanced) phase. Due to factors such as the shortage of radio spectrum resources, spectrum resources that operators have may be non-contiguous, and each single frequency band cannot meet bandwidth requirements of LTE-Advanced. For the foregoing reason, 3GPP Release (Release) 10 introduces a concept of carrier aggregation (carrier aggregation, CA), which aggregates a plurality of contiguous or non-contiguous carriers into a larger bandwidth (for example, a maximum of 100 megahertz (megahertz, MHz), to meet 3GPP requirements.

Carrier aggregation (carrier aggregation) aggregates a plurality of contiguous or non-contiguous carriers to form a larger bandwidth, thereby increasing an uplink/downlink peak rate or improving measurement precision. A transmit end aggregates and sends signals on a plurality of contiguous or non-contiguous carriers (for example, a plurality of PFLs or a plurality of CCs), and a receive end receives an aggregated signal on the plurality of corresponding contiguous or non-contiguous carriers (for example, the plurality of PFLs or the plurality of CCs), so that a current communication bandwidth is a bandwidth obtained by aggregating the plurality of carriers, thereby increasing a communication bandwidth and meeting a higher data rate or measurement requirement.

For example, a second apparatus sends two signals to a first apparatus on a first PFL and a second PFL. The first apparatus may aggregate the first PFL and the second PFL into a larger bandwidth, and obtain a measurement result based on the plurality of signals received on the first PFL and the second PFL. Because the measurement result is obtained based on signals on a plurality of carrier frequencies (for example, a plurality of PFLs), a bandwidth obtained by aggregating the plurality of PFLs is larger. In addition, because a bandwidth of a signal is inversely correlated with an estimated error of a measurement result, the measurement result may have a smaller error and higher precision.

For another example, a first apparatus sends two signals to a second apparatus on a first CC and a second CC. The second apparatus may aggregate the first CC and the second CC into a larger bandwidth, and obtain a measurement result based on the plurality of signals received on the first CC and the second CC. Because the measurement result is obtained based on signals on a plurality of carrier frequencies (for example, a plurality of CCs), a bandwidth obtained by aggregating the plurality of CCs is larger. In addition, because a bandwidth of a signal is inversely correlated with an estimated error of a measurement result, the measurement result may have a smaller error and higher precision.

(6) ARP.

The ARP (for example, a first ARP and a second ARP in embodiments of this application) may be understood as a physical point that is on an antenna panel corresponding to the ARP and that is used as a reference for antenna calibration. The ARP may be a point on the antenna panel, or a point outside the antenna panel. For example, the ARP may be a center point of the antenna panel, or a location of an antenna element on the antenna panel.

An error of a measurement result (for example, TOA) is inversely correlated with a bandwidth of a signal used for positioning. For example, a larger bandwidth of a signal used for positioning indicates higher estimation precision of a measurement result. For another example, a smaller bandwidth of a signal used for positioning indicates lower estimation precision of a measurement result. To further improve a measurement result, a plurality of reference signals may be sent by using a carrier aggregation solution, that is, a receive end may obtain a measurement result through measurement based on the plurality of reference signals. Because the measurement result is obtained based on the plurality of reference signals, and a bandwidth obtained by performing carrier aggregation on the plurality of reference signals is larger, estimation precision of the measurement result may be improved.

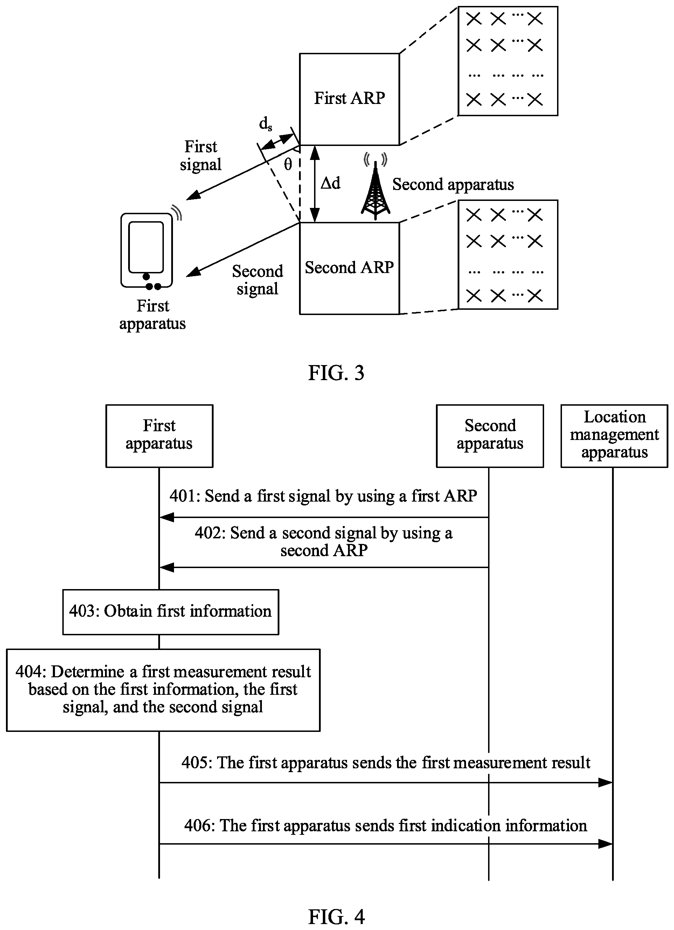

FIG. 3 is an example of a diagram of an architecture of a communication system. In FIG. 3, an example in which a second apparatus sends a signal to a first apparatus is used. As shown in FIG. 3, the second apparatus may include a plurality of antenna panels, and one antenna panel may correspond to one ARP. The second apparatus may send a first signal by using a first ARP, and the second apparatus sends a second signal by using a second ARP. The first signal and the second signal may also be understood as signals on two aggregated carrier frequencies (or two PFLs). The first apparatus may obtain a measurement result through measurement based on the first signal and the second signal. However, the first ARP and the second ARP on the second apparatus may not be on a same antenna panel, that is, an antenna panel corresponding to the first ARP and an antenna panel corresponding to the second ARP may not be a same antenna panel. Due to a hardware implementation problem, an edge of a panel or a spacing between panels is generally greater than a spacing between antenna elements in the panel, resulting in a case in which a plurality of panels are not co-located (that is, channels between a user and different panels on a base station side are different).

As shown in FIG. 3, because of a spacing $\Delta d$ between the first ARP and the second ARP, there is a distance difference ds (for example, $ds=\Delta d*\cos\theta$) between propagation paths of the first signal and the second signal. As a result, the first signal and the second signal pass through different channels. If the antenna panels corresponding to the first ARP and the second ARP are considered as a same antenna panel, and a phenomenon that the antenna panels corresponding to the first ARP and the second ARP are not co-located is not considered, that is, a problem that the first signal and the second signal pass through different channels is ignored, an error is introduced in the measurement result obtained based on the plurality of signals, reducing accuracy of the measurement result and reducing positioning accuracy.

The solutions provided in embodiments of this application are also applicable to a scenario in which the first apparatus sends a signal to the second apparatus. In this scenario, the first apparatus sends a plurality of signals (for example, a third signal and a fourth signal), and the second apparatus separately receives the plurality of signals by using a plurality of ARPs. When the second apparatus obtains a measurement result based on the plurality of received signals, a spacing between the plurality of ARPs causes the plurality of signals sent by the first apparatus to pass through different channels, reducing accuracy of the measurement result. It can be learned that similar problems to those in the scenario shown in FIG. 3 also exist in this scenario.

Based on the foregoing problems, embodiments of this application provide a possible implementation. In this implementation, a first apparatus or a second apparatus may determine a measurement result based on a spacing between a plurality of ARPs for transmitting a plurality of signals, thereby improving measurement precision.

Based on the embodiments shown in FIG. 1, FIG. 2A, FIG. 2B, FIG. 2C, FIG. 2D, and FIG. 3 and the foregoing other content, FIG. 4 is an example of a schematic flowchart of a positioning method according to an embodiment of this application. The embodiment shown in FIG. 4 is described by using an example in which a second apparatus sends a signal to a first apparatus. The solution provided in FIG. 4 may be considered as a possible embodiment in the communication scenario provided in FIG. 3. The solution provided in this embodiment of this application is also applicable to a scenario in which the first apparatus sends a signal to the second apparatus. Content related to the scenario is not described herein, but described in detail subsequently.

For ease of understanding, FIG. 4 is described through interaction between the first apparatus, the second apparatus, and a location management apparatus. In this embodiment of this application, the first apparatus may be the terminal device in FIG. 1, FIG. 2A, FIG. 2B, FIG. 2C, or FIG. 2D, or a chip (system) in the terminal. In this embodiment of this application, the second apparatus may be the network device in FIG. 1, FIG. 2A, FIG. 2B, FIG. 2C, or FIG. 2D, or a chip (system) in the network device. The location management apparatus in this embodiment of this application may be the location management device in FIG. 1, FIG. 2A, FIG. 2B, FIG. 2C, or FIG. 2D, or a chip (system) in the location management device. The location management device may include one or more of an LMF, an LMC, or an LLMF.

As shown in FIG. 4, the method may include step 401, step 402, and step 404. The method may further include step 403, step 405, and step 406. The following provides descriptions with reference to FIG. 4.

Step 401: The second apparatus sends a first signal by using a first ARP.

Correspondingly, the first apparatus receives the first signal.

Step 402: The second apparatus sends a second signal by using a second ARP.

Correspondingly, the first apparatus receives the second signal. The second ARP is different from the first ARP.

The first signal and the second signal may be PRSs or the like. For related examples, refer to the foregoing descriptions. Details are not described again.

In a possible implementation, the second apparatus or the location management apparatus may send information about a resource of the first signal and a resource of the second signal to the first apparatus, so that the first apparatus receives the first signal and the second signal on these resources. The resource of the first signal includes a time domain resource and/or a frequency domain resource. The resource of the second signal includes a time domain resource and/or a frequency domain resource.

For example, the first signal occupies a first time domain resource, and the second signal occupies a second time domain resource. The first time domain resource and the second time domain resource may be the same (that is, the first time domain resource and the second time domain resource completely overlap). In this way, it can be ensured that the two signals pass through channels at a same moment, so that a first measurement result determined based on the two signals can be more accurate. Alternatively, the first time domain resource and the second time domain resource may be different (for example, the first time domain resource and the second time domain resource partially overlap or do not overlap).

For another example, the first signal occupies a first frequency domain resource, and the second signal occupies a second frequency domain resource. The first frequency domain resource and the second frequency domain resource may be contiguous frequency domain resources in a frequency band (band). This allows for greater compatibility with the conventional technology. For example, a frequency band range of a band 79 is 4400 MHz to 5000 MHz. It is assumed that there are two PFLs (for example, a PFL #1 and a PFL #2) in the band, which each correspond to a 100 MHz bandwidth. In this case, if an end frequency domain location of the PFL #1 is contiguous to a start frequency domain location of the PFL #2, the PFL #1 and the PFL #2 may be considered as contiguous frequency domain resources in a same band. For example, if the PFL #1 corresponds to 4400 MHz to 4499 MHz, and the PFL #2 corresponds to 4500 MHz to 4599 MHz, the PFL #1 and the PFL #2 are contiguous frequency domain resources.

Alternatively, the first frequency domain resource and the second frequency domain resource may be frequency domain resources in different frequency bands (band) (for example, the first frequency domain resource is located in a first frequency band, the second frequency domain resource is located in a second frequency band, and the first frequency band and the second frequency band are different, where for example, the first frequency band is a band #n3, and the second frequency band is a band #n4). Alternatively, the first frequency domain resource and the second frequency domain resource may be two non-contiguous frequency domain resources in a same frequency band (band).

In a possible implementation, the first frequency domain resource may be a first PFL, and the second frequency domain resource may be a second PFL. The first PFL and the second PFL may be understood as aggregated PFLs. The first signal and the second signal may be sent through aggregation (aggregation). For example, the first signal corresponds to the first PFL, the second signal corresponds to the second PFL, and the first PFL is different from the second PFL. The second apparatus sends the first signal on the first PFL by using the first ARP, and the second apparatus sends the second signal on the second PFL by using the second ARP.

Step 403: The first apparatus obtains first information.

The first information includes information indicating a location of the first ARP and a location of the second ARP. The first information, the first signal, and the second signal are used to determine the first measurement result, and the first measurement result is used for positioning.

In step 403, the first apparatus may obtain the first information in a plurality of manners. In a possible implementation, the second apparatus may send the first information to the location management apparatus, and the location management apparatus sends the received first information to the first apparatus. For example, the location management apparatus may send the first information by using a positioning request and information exchange signaling. In another possible implementation, the second apparatus may send the first information to the first apparatus.

Step 403 is an optional step, and may not be performed. For example, the first information may alternatively be preconfigured in the first apparatus. For another example, the first information may alternatively be preconfigured in the first apparatus by the second apparatus or the location management apparatus. For another example, the first information may be some preset values configured based on historical experience. For another example, the first information may be historically obtained first information.

Step 404: The first apparatus determines the first measurement result based on the first information, the first signal, and the second signal.

The first measurement result is used to position the first apparatus. In this embodiment of this application, the first apparatus may compensate for the first signal and/or the second signal based on the first information, and then determine the first measurement result. The first apparatus may alternatively compensate for a channel estimation result of the first signal and/or a channel estimation result of the second signal based on the first information, and then determine the first measurement result. In this way, accuracy of the first measurement result can be improved.

There are a plurality of solutions for determining the first measurement result by the first apparatus. For example, the first apparatus may splice the first signal and the second signal into a signal with a larger bandwidth, and then measure the signal with a larger bandwidth, to obtain the first measurement result. It may also be understood that the first measurement result is determined based on a signal obtained by splicing the first signal and the second signal. Because a bandwidth of a signal is inversely correlated with an estimated error of a measurement result, this solution can improve estimation accuracy of the first measurement result, thereby improving positioning accuracy.

In another possible implementation, the first apparatus may splice a channel estimation result of the first signal and a channel estimation result of the second signal, to obtain a channel estimation result corresponding to a signal with a larger bandwidth (which may be referred to as a third channel estimation result for differentiation). It may also be understood that the first measurement result is determined based on the third channel estimation result. Because a bandwidth of a signal is inversely correlated with an estimated error of a measurement result, this solution can improve estimation accuracy of the first measurement result, thereby improving positioning accuracy.

Step 405: The first apparatus sends the first measurement result.

Correspondingly, the location management apparatus receives the first measurement result.

Step 406: The first apparatus sends first indication information.

Correspondingly, the location management apparatus receives the first indication information.

The first indication information indicates that the first measurement result is determined based on the first information. In a possible implementation, after obtaining the first indication information, the location management apparatus may determine that the first measurement result is determined based on at least one signal or channel estimation result obtained through antenna panel spacing compensation. In this way, the location management apparatus may determine, based on the first indication information, that accuracy or reliability of the first measurement result is higher. Therefore, when the first apparatus is positioned, positioning may be performed based on the measurement result with higher accuracy or reliability, or a larger weight is set for the measurement result with higher accuracy or reliability, thereby improving positioning accuracy.

Step 405 and step 406 are optional steps, and step 405 and/or step 406 may not be performed. In this embodiment of this application, the first apparatus may alternatively send the first measurement result (or the first measurement result and the first indication information) to the second apparatus, and the second apparatus may determine a location of the first apparatus based on the measurement result, or the second apparatus may report the measurement result to the location management apparatus. In FIG. 4, an example in which the first apparatus sends the first measurement result and the first indication information to the location management apparatus is used for illustration.

In a possible implementation, the second apparatus may send a plurality of signals, and the first apparatus may determine the first measurement result based on the plurality of signals. The plurality of signals may include at least the first signal and the second signal. In this embodiment of this application, an example in which the plurality of signals include the first signal and the second signal is used for description. When the plurality of signals include more signals, a related solution is similar thereto, and details are not described again.

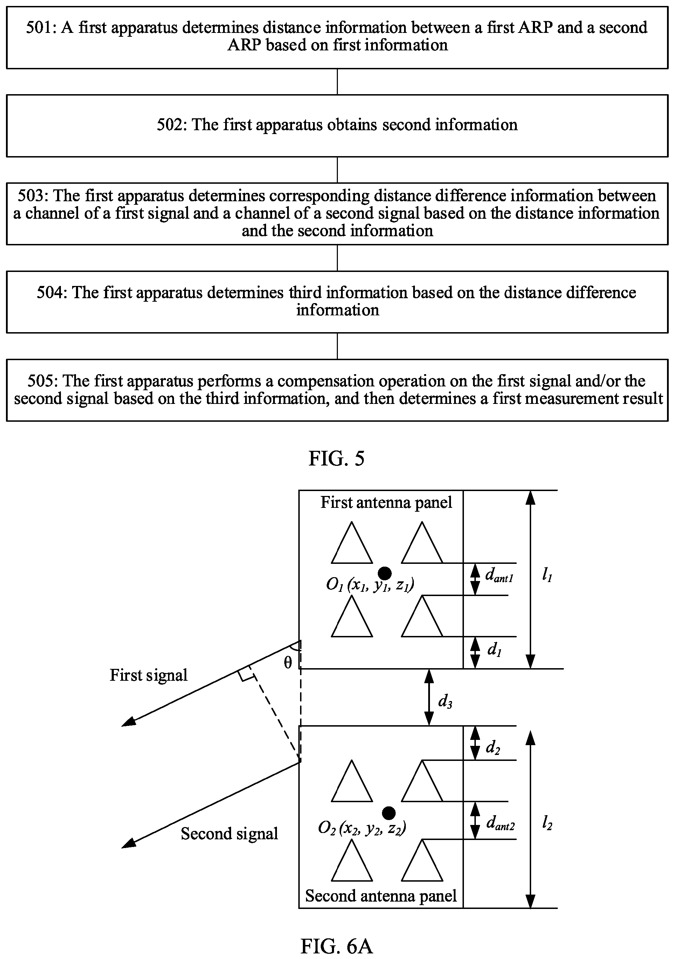

Based on the embodiments shown in FIG. 1, FIG. 2A, FIG. 2B, FIG. 2C, FIG. 2D, FIG. 3, and FIG. 4 and the foregoing other content, FIG. 5 is an example of a schematic flowchart of a measurement result determining method according to an embodiment of this application. The embodiment shown in FIG. 5 may be considered as a possible implementation of step 404 in FIG. 4. FIG. 5 provides a possible implementation in which the first apparatus determines the first measurement result. For the first apparatus, the second apparatus, and the location management apparatus in FIG. 5, refer to the related descriptions in FIG. 4. Details are not described again.

As shown in FIG. 5, the method may include step 501, step 502, step 503, step 504, and step 505. The following provides descriptions with reference to FIG. 5.

Step 501: The first apparatus determines distance information between the first ARP and the second ARP based on the first information.

The first information includes the information indicating the location of the first ARP and the location of the second ARP.

In a possible implementation, the information indicating the location of the first ARP and the location of the second ARP may include, for example, at least one of information A1, information A2, information A3, or information A4. The information A1 includes location information of the first ARP and location information of the second ARP. The information A2 includes relative location information of the first ARP and the second ARP. The information A3 includes distance information between the first ARP and the second ARP. The information A4 includes information indicating a distance between a second antenna panel and a first antenna panel. The first ARP corresponds to the first antenna panel of the second apparatus, and the second ARP corresponds to the second antenna panel of the second apparatus.

Information A1: Location information of the first ARP and location information of the second ARP.

The location information of the first ARP and the location information of the second ARP may be coordinate information in a coordinate system (for example, a geodetic coordinate system). For example, the location information of the first ARP is information indicating a coordinate location $(x_1, y_1, z_1)$, and the location information of the second ARP is information indicating a coordinate location $(x_2, y_2, z_2)$. The first apparatus may determine the distance information between the first ARP and the second ARP based on the two pieces of location information in the information A1, for example, may use a straight-line distance between the two coordinate locations as the distance information between the first ARP and the second ARP.

The coordinate system in this embodiment of this application may be a global coordinate system (Global Coordinate System, GCS) or a local coordinate system (Local Coordinate System, LCS). The global coordinate system is a coordinate system of three-dimensional space in which an object is located. The local coordinate system is a coordinate system in which a center of an object is used as a coordinate origin, and operations such as rotation or translation of the object are performed around the local coordinate system. In this case, when an operation such as rotation or translation is performed on an object model, a corresponding rotation or translation operation is also performed on the local coordinate system.

Information A2: Relative location information of the first ARP and the second ARP.

The relative location information of the first ARP and the second ARP may include a relative amount between coordinate values of the first ARP and the second ARP. For example, the relative location information of the first ARP and the second ARP is information indicating $(\Delta x, \Delta y, \Delta z)$, where $\Delta x$ is a distance between projections of locations of the first ARP and the second ARP on an x-axis, $\Delta y$ is a distance between projections of the locations of the first ARP and the second ARP on a y-axis, and $\Delta z$ is a distance between projections of the locations of the first ARP and the second ARP on a z-axis. The first apparatus may determine the distance information between the first ARP and the second ARP based on the information A2, for example, may use a straight-line distance corresponding to the locations of the first ARP and the second ARP as the distance information between the first ARP and the second ARP.

Information A3: Distance information between the first ARP and the second ARP.

The first apparatus may determine the distance information between the first ARP and the second ARP based on the information A3. The distance information between the first ARP and the second ARP may include a straight-line distance between the first ARP and the second ARP.

Information A4: Information indicating the distance between the second antenna panel and the first antenna panel.

The information A4 may include at least one of information A4.1, information A4.2, information A4.3, information A4.4, information A4.5, or information A4.6. The information A4.1 includes location information of the first antenna panel and location information of the second antenna panel. The information A4.2 includes relative location information between the first antenna panel and the second antenna panel. The information A4.3 includes distance information between the second antenna panel and the first antenna panel. The information A4.4 includes orientation information of the first antenna panel and/or orientation information of the second antenna panel. The information A4.5 includes relative orientation information of the first antenna panel and the second antenna panel. The information A4.6 includes contour information of the first antenna panel and/or contour information of the second antenna panel.

Information A4.1: Location information of the first antenna panel and location information of the second antenna panel.

The location information of the first antenna panel may be coordinate information of one or more parts on the first antenna panel in a coordinate system (for example, a geodetic coordinate system). For example, the location information of the first antenna panel is information indicating a coordinate location $(x_1, y_1, z_1)$, and the coordinate location $(x_1, y_1, z_1)$ is coordinates of a part on the first antenna panel, for example, coordinates of a central part of the first antenna panel, or coordinates of an edge part of the first antenna panel, or coordinates of a part on the first antenna panel that is close to (or far from) the second antenna panel, or coordinates of a location of an antenna element on the first antenna panel that is close to (or far from) a direction of the second antenna panel.

The location information of the second antenna panel may be coordinate information of one or more parts on the second antenna panel in a coordinate system (for example, a geodetic coordinate system). For example, the location information of the second antenna panel is information indicating a coordinate location $(x_2, y_2, z_2)$, and the coordinate location $(x_2, y_2, z_2)$ is coordinates of a part on the second antenna panel, for example, coordinates of a central part of the second antenna panel, or coordinates of an edge part of the second antenna panel, or coordinates of a part on the second antenna panel that is close to (or far from) the first antenna panel, or coordinates of a location of an antenna element on the second antenna panel that is close to (or far from) a direction of the first antenna panel.

Information A4.2: Relative location information between the first antenna panel and the second antenna panel.

The relative location information between the first antenna panel and the second antenna panel may include a relative amount between a part of the first antenna panel and a part of the second antenna panel. For example, the relative location information between the first antenna panel and the second antenna panel is information indicating $(\Delta x, \Delta y, \Delta z)$, where $\Delta x$ is a distance between projections of a central part of the first antenna panel and a central part of the second antenna panel on an x-axis, $\Delta y$ is a distance between projections of the central part of the first antenna panel and the central part of the second antenna panel on a y-axis, and $\Delta z$ is a distance between projections of the central part of the first antenna panel and the central part of the second antenna panel on a z-axis. The first apparatus may determine the distance information between the first ARP and the second ARP based on the information A2, for example, may use a straight-line distance corresponding to the central part of the first antenna panel and the central part of the second antenna panel as the distance information between the first ARP and the second ARP.

Information A4.3: Distance information between the second antenna panel and the first antenna panel.

The distance information between the second antenna panel and the first antenna panel may include distance information between a part of the first antenna panel and a part of the second antenna panel, for example, may be a straight-line distance between the two parts. For example, the distance information between the second antenna panel and the first antenna panel is a straight-line distance between a central part of the first antenna panel and a central part of the second antenna panel, or a straight-line distance between an edge part of the first antenna panel and an edge part of the second antenna panel.

Information A4.4: Orientation information of the first antenna panel and/or orientation information of the second antenna panel.

For example, the orientation information of the first antenna panel may include $(\alpha_1, \beta_1, \gamma_1)$, where $\alpha_1$, $\beta_1$, and $\gamma_1$ may respectively represent angles between a normal vector of the first antenna panel and an x-axis, a y-axis, and a z-axis in a three-dimensional coordinate system.

For example, the orientation information of the second antenna panel may include $(\alpha_2, \beta_2, \gamma_2)$, where $\alpha_2$, $\beta_2$, and $\gamma_2$ may respectively represent angles between a normal vector of the second antenna panel and an x-axis, a y-axis, and a z-axis in a three-dimensional coordinate system.

Information A4.5: Relative orientation information of the first antenna panel and the second antenna panel.

The relative orientation information of the first antenna panel and the second antenna panel may include a relative amount between orientation information of the first antenna panel and orientation information of the second antenna panel. For example, the relative orientation information of the first antenna panel and the second antenna panel is information indicating $(\Delta\alpha, \Delta\beta, \Delta\gamma)$, where $\Delta\alpha$ is a difference between included angles between a normal vector of the first antenna panel and a normal vector of the second antenna panel and an x-axis in a three-dimensional coordinate system, $\Delta\beta$ is a difference between included angles between the normal vector of the first antenna panel and the normal vector of the second antenna panel and a y-axis in a three-dimensional coordinate system, and $\Delta\gamma$ is a difference between included angles between the normal vector of the first antenna panel and the normal vector of the second antenna panel and a z-axis in a three-dimensional coordinate system.

Information A4.6: Contour information of the first antenna panel and/or contour information of the second antenna panel.

The contour information of the first antenna panel may include at least one of shape information of the first antenna panel (for example, a rectangle, a square, or a polygon), size information of the first antenna panel (for example, a length or a width of the first antenna panel), or arrangement information of antenna elements of the first antenna panel. The arrangement information of the antenna elements of the first antenna panel may include, for example, distance information between two antenna elements (or referred to as a spacing between antenna elements), or distance information between an antenna element (for example, an antenna element located at an outermost edge of the first antenna panel) and an edge of the first antenna panel.

The contour information of the second antenna panel may include at least one of shape information of the second antenna panel, size information of the second antenna panel, or arrangement information of antenna elements of the second antenna panel. The arrangement information of the antenna elements of the second antenna panel may include, for example, distance information between two antenna elements, or distance information between an antenna element and an edge of the second antenna panel. For related content, refer to the related descriptions of the contour information of the first antenna panel. Details are not described again.

In a possible implementation, the distance information between the first ARP and the second ARP may be determined based on at least one of the following (the following content may all be obtained based on the first information): a distance between the first ARP and the second ARP; a distance between an edge of the first antenna panel and an edge of the second antenna panel; a distance between an antenna element on an edge of the first antenna panel and an antenna element on an edge of the second antenna panel; a distance between an antenna element on an edge of the first antenna panel and an edge of the first antenna panel; a distance between an antenna element on an edge of the second antenna panel and an edge of the second antenna panel; a spacing between antenna elements on the first antenna panel; a spacing between antenna elements on the second antenna panel; a side length of the first antenna panel; or a side length of the second antenna panel.

FIG. 6A is an example of a diagram of a structure of a plurality of antenna panels on the second apparatus according to an embodiment of this application. FIG. 6A is a layout diagram of the first antenna panel and the second antenna panel. As shown in FIG. 6A, the location of the first ARP is $O_1(x_1, y_1, z_1)$, and the location of the second ARP is $O_2(x_2, y_2, z_2)$. A length of the first antenna panel in an arrangement direction is $l_1$, a length of the second antenna panel in an arrangement direction is $l_2$, a spacing between antenna elements on the first antenna panel in an antenna panel arrangement direction is $d_{ant1}$, and a spacing between antenna elements on the second antenna panel in an antenna panel arrangement direction is $d_{ant2}$. A distance between an antenna element located on an edge of the first antenna panel and a contour (or an edge) of the first antenna panel is $d_1$. A distance between an antenna element located on an edge of the second antenna panel and a contour (or an edge) of the second antenna panel is $d_2$. The distance between the first antenna panel and the second antenna panel may be a distance $d_3$ between edge contours of the first antenna panel and the second antenna panel. An included angle between a signal used for positioning (for example, the first signal) and an antenna panel (for example, the first antenna panel) may be represented as θ in FIG. 6A.

The distance between the first ARP and the second ARP may be represented as Δ$d$ in FIG. 3. With reference to FIG. 6A, methods for calculating Δ$d$ are provided:

$$\Delta d = |O_1 O_2| - \frac{l_1 + l_2}{2}$$

$$\Delta d = |O_1 O_2| - \frac{l_1 + l_2}{2} + d_1 + d_2$$

$$\Delta d = |O_1 O_2| - \frac{l_1 + l_2}{2} + d_1 + d_2 - d_{ant}$$

$$\Delta d = d_3$$

$$\Delta d = d_1 + d_2 + d_3$$

$$\Delta d = d_1 + d_2 + d_3 - d_{ant}$$

The foregoing formulas may be understood as examples for calculating Δ$d$. For meanings of the parameters in the foregoing formulas, refer to the related descriptions in FIG. 6A. $d_{ant}$ may be $d_{ant1}$ or $d_{ant2}$, or may be a value calculated based on $d_{ant1}$ and $d_{ant2}$, for example, an average value of $d_{ant1}$ and $d_{ant2}$.

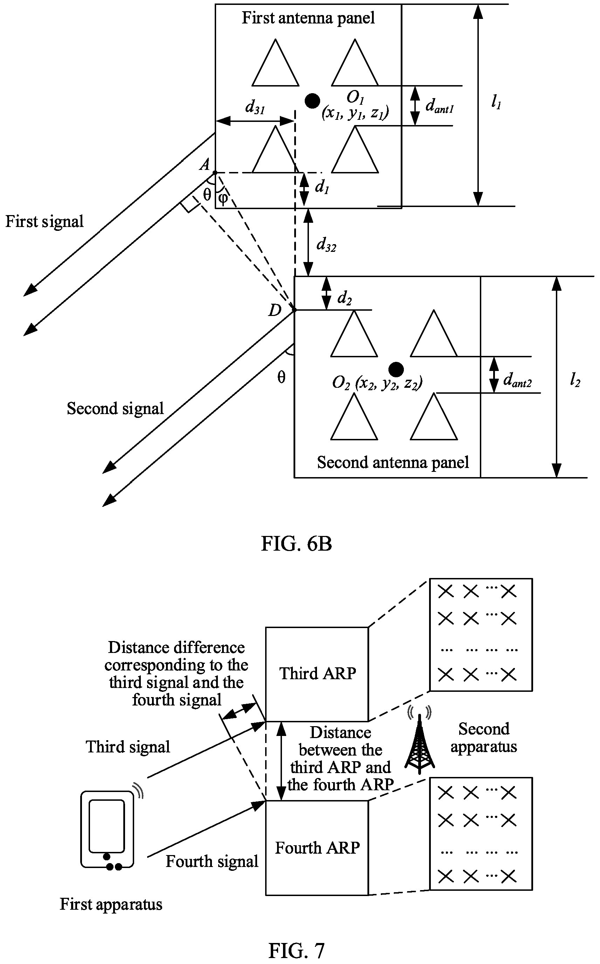

FIG. 6B is an example of another diagram of a structure of a plurality of antenna panels on the second apparatus according to an embodiment of this application. FIG. 6B is a layout diagram of the first antenna panel and the second antenna panel. As shown in FIG. 6B, for $O_1(x_1, y_1, z_1)$, $O_2(x_2, y_2, z_2)$, $l_1$, $l_2$, $d_{ant1}$, $d_{ant2}$, $d_1$, and $d_2$, refer to the related descriptions in FIG. 6B. Details are not described again. A distance between an edge contour of the first antenna panel and an edge contour of the second antenna panel in a horizontal direction is $d_{31}$. A distance between an edge contour of the first antenna panel and an edge contour of the second antenna panel in a vertical direction is $d_{32}$. An included angle between a signal used for positioning (for example, the first signal) and an antenna panel (for example, the first antenna panel) may be represented as θ in FIG. 6B. An included angle between a connection line between a point A and a point D and an edge of the first antenna panel is represented as ϑ.

The distance between the first ARP and the second ARP may be represented as Δ$d$. With reference to FIG. 6B, a possible method for calculating $\Delta d$ is provided: $\Delta d = \frac{d_1 + d_{32} + d_2}{\cos \delta}$ , where $\delta = \tan^{-1} \frac{d_{31}}{d_1 + d_{32} + d_2}$ .

Step 502: The first apparatus obtains second information.

The second information may include angle of departure information of a signal sent by the second apparatus to the first apparatus. The second information may also include angle of arrival information of a signal sent by the first apparatus to the second apparatus.

The second information in this embodiment of this application may be obtained by the first apparatus based on the received first signal and/or second signal, for example, may be obtained by measuring the first signal and/or the second signal. Alternatively, the second information may be sent by the second apparatus or the location management apparatus to the first apparatus. The second information may be obtained by the second apparatus based on historical experience. For example, the second information may be a range of an angle of departure, or may be a range of an angle of arrival.

Step 503: The first apparatus determines corresponding distance difference information between a channel of the first signal and a channel of the second signal based on the distance information and the second information.

The first apparatus may construct a data operation formula among the distance information, the second information, and the distance difference information based on a geometric relationship constructed by the distance information, the second information, and the distance difference information.

For example, with reference to the examples in FIG. 3 and FIG. 6A, the corresponding distance difference between the channel of the first signal and the channel of the second signal is $ds = (\Delta d * \cos\theta)$.

For another example, with reference to the examples in FIG. 3 and FIG. 6B, the corresponding distance difference between the channel of the first signal and the channel of the second signal is $ds = (\Delta d * \cos (\theta + \delta))$.

In actual application, a mathematical operation formula among the distance difference, the distance information, and the second information may alternatively be another formula. The distance difference information in this embodiment of this application may be understood as information indicating a distance difference.

The distance difference may be calculated based on a geometric location relationship between an antenna panel and a signal, for example, calculated based on a distance between antenna panels and a direction of arrival of the signal. The corresponding distance difference information between the channel of the first signal and the channel of the second signal is caused by the distance between the first ARP and the second ARP, and there may be a geometric relationship between the distance between the first ARP and the second ARP and the distance difference. Because the first apparatus may determine the distance difference information with reference to the second information, accuracy of the distance difference information can be improved, thereby improving accuracy of the first measurement result, and further improving positioning accuracy.

Step 504: The first apparatus determines third information based on the distance difference information.

The third information includes a phase difference and/or a delay difference between a signal transmitted through the channel of the first signal and a signal transmitted through the channel of the second signal.

In a possible example, $\Delta\varphi = \frac{ds}{\lambda} * 2\pi$, where $\Delta\varphi$ is the phase difference between the signal transmitted through the channel of the first signal and the signal transmitted through the channel of the second signal, $ds$ is the corresponding distance difference between the channel of the first signal and the channel of the second signal, $\lambda$ is a carrier wavelength, * represents multiplication, and $\pi$ represents a circumference.

In another possible example, $\Delta t = \frac{ds}{c}$, where $\Delta t$ is the delay difference between the signal transmitted through the channel of the first signal and the signal transmitted through the channel of the second signal, $ds$ is the corresponding distance difference between the channel of the first signal and the channel of the second signal, and $c$ is a propagation speed of an electromagnetic wave.

The foregoing provides the possible examples. In actual application, the third information may alternatively be calculated based on the distance difference information in another manner, for example, calculated based on variant formulas of the foregoing formulas.

Because the phase difference and/or the delay difference between the signal transmitted through the channel of the first signal and the signal transmitted through the channel of the second signal may be caused by the distance difference between the two channels, according to the solution in which the first apparatus determines the phase difference and/or the delay difference between the two channels with reference to the distance difference information between the two signals, a more accurate phase difference and/or delay difference can be obtained, thereby improving accuracy of the first measurement result, and further improving positioning accuracy.

Step 505: The first apparatus performs a compensation operation on the first signal and/or the second signal based on the third information, and then determines the first measurement result.

In step 505, there are a plurality of implementations in which the first apparatus performs the compensation operation and determines the first measurement result. The following separately describes possible implementations by using an implementation B1 and an implementation B2. In the implementation B1, the first apparatus may compensate for a channel estimation result corresponding to the first signal and/or a channel estimation result corresponding to the second signal. In the implementation B2, the first apparatus may compensate for the first signal and/or the second signal.

Implementation B1: The first apparatus may compensate for the channel estimation result corresponding to the first signal and/or the channel estimation result corresponding to the second signal, and then determine the first measurement result.

In a possible implementation, the first apparatus may separately compensate for the channel estimation result corresponding to the first signal and the channel estimation result corresponding to the second signal, to obtain a compensated channel estimation result of the first signal and a compensated channel estimation result of the second signal. The first apparatus may determine the first measurement result based on the compensated channel estimation result of the first signal and the compensated channel estimation result of the second signal. For example, for the first signal, the compensated channel estimation result of the first signal and the compensated channel estimation result of the second signal may be spliced to obtain a spliced channel estimation result, and the first measurement result is calculated based on the spliced channel estimation result.

In another possible implementation, the first apparatus may compensate for one of the channel estimation result corresponding to the first signal or the channel estimation result corresponding to the second signal. For example, if the first apparatus compensates for the channel estimation result corresponding to the first signal and does not compensate for the channel estimation result corresponding to the second signal, the first apparatus may determine the first measurement result based on a compensated channel estimation result of the first signal and the uncompensated channel estimation result of the second signal. For example, for the first signal, the compensated channel estimation result of the first signal and the channel estimation result of the second signal may be spliced to obtain a spliced channel estimation result, and the first measurement result is calculated based on the spliced channel estimation result. For another example, if the first apparatus compensates for the channel estimation result corresponding to the second signal and does not compensate for the channel estimation result corresponding to the first signal, the first apparatus determines the first measurement result based on a compensated channel estimation result of the second signal and an uncompensated channel estimation result of the first signal. The related solution is similar to the foregoing content, and details are not described again.

For example, the channel estimation result corresponding to the first signal is $H_1 = [h_{11}, h_{12}, \cdots, h_{1N_1}]^T$, and the channel estimation result of the second signal is $H_2 = [h_{21}, h_{22}, \cdots, h_{2N_2}]^T$, where $N_1$ is a quantity of subcarriers on a PFL corresponding to the first signal, and $N_2$ is a quantity of subcarriers on a PFL corresponding to the second signal; $h_{11}$ may represent a channel frequency response of a signal used for positioning (for example, the first signal) on a first subcarrier of the PFL corresponding to the first signal, $h_{12}$ may represent a channel frequency response of the signal used for positioning (for example, the first signal) on a second subcarrier of the PFL corresponding to the first signal, and $h_{1N_1}$ may represent a channel frequency response of the signal used for positioning (for example, the first signal) on an $N_1^{th}$ subcarrier of the PFL corresponding to the first signal; and $h_{21}$ may represent a channel frequency response of a signal used for positioning (for example, the second signal) on a first subcarrier of the PFL corresponding to the second signal, $h_{22}$ may represent a channel frequency response of the signal used for positioning (for example, the second signal) on a second subcarrier of the PFL corresponding to the second signal, and $h_{2N_2}$ may represent a channel frequency response of the signal used for positioning (for example, the second signal) on an $N_2^{th}$ subcarrier of the PFL corresponding to the second signal.

For example, the first apparatus compensates for a second channel estimation result. For example, the first apparatus performs phase compensation on the second channel estimation result, and the compensated channel estimation result corresponding to the second signal is $\widehat{H_2} = H_2 * e^{-j*\Delta\varphi}$, where $H_2$ is the uncompensated channel estimation result corresponding to the second signal, and $\Delta\varphi$ is the phase difference between the signal transmitted through the channel of the first signal and the signal transmitted through the channel of the second signal.

For another example, the first apparatus compensates for a second channel estimation result. For example, the first apparatus performs delay compensation on the second channel estimation result, and the compensated channel estimation result $\widehat{H_2}$ corresponding to the second signal satisfies:

$$\widehat{H_2} = H_2 * e^{-j*2\pi*[f_2+0*f_s,\ f_2+1*f_s,\cdots,f_2+(N_2-1)*f_s\ ]^T*\Delta t}$$

$H_2$ is the uncompensated channel estimation result corresponding to the second signal, $\Delta t$ is the delay difference between the signal transmitted through the channel of the first signal and the signal transmitted through the channel of the second signal, $f_2$ represents a frequency of a lowest-frequency subcarrier of the PFL corresponding to the second signal, $f_s$ may represent a subcarrier spacing, and $N_2$ is the quantity of subcarriers on the PFL corresponding to the second signal.

In a possible implementation, the first apparatus splices the compensated channel estimation result corresponding to the second signal and the channel estimation result corresponding to the first signal, to obtain a spliced channel estimation result $H_{1+2} = [H_1; \widehat{H_2}]^T$, and then the first apparatus may obtain the first measurement result based on $H_{1+2}$,

where the first measurement result includes, for example, downlink TOA and/or uplink TDOA.

Implementation B2: The first apparatus may compensate for the first signal and/or the second signal, and then determine the first measurement result.

In a possible implementation, the first apparatus may separately compensate for the first signal and the second signal, to obtain a compensated first signal and a compensated second signal. The first apparatus may determine the first measurement result based on the compensated first signal and the compensated second signal. For example, for the first signal, the compensated first signal and the compensated second signal may be spliced to obtain a spliced signal, and the first measurement result is calculated based on the spliced signal.

In another possible implementation, the first apparatus may compensate for one of the first signal or the second signal. For example, if the first apparatus compensates for the first signal and does not compensate for the second signal, the first apparatus may determine the first measurement result based on a compensated first signal and the uncompensated second signal. For example, for the first signal, the compensated first signal and the uncompensated second signal may be spliced to obtain a spliced signal, and the first measurement result is calculated based on the spliced signal. For another example, if the first apparatus compensates for the second signal and does not compensate for the first signal, the first apparatus determines the first measurement result based on a compensated second signal and the uncompensated first signal. The related solution is similar to the foregoing content, and details are not described again.

The first apparatus may determine the first measurement result based on the spliced signal in a plurality of manners. For example, the first apparatus determines a channel estimation result based on the spliced signal, and then determines the first measurement result based on the channel estimation result. For another example, the first apparatus determines the first measurement result based on the spliced signal. In this process, the channel estimation result may not need to be calculated.

Because a spacing between the first ARP and the second ARP has large impact on the phase difference and/or the delay difference between the signal transmitted through the channel of the first signal and the signal transmitted through the channel of the second signal, the solution in which the first apparatus determines the third information based on the first information and then performs the compensation operation based on the third information can improve accuracy of a compensation amount, thereby further improving accuracy of the first measurement result.

The solution provided in FIG. 5 provides the solution for determining the first measurement result based on the first information. It can be learned from the foregoing solution that, based on the first information, the first apparatus may compensate for the first signal and/or the second signal, and/or compensate for the channel estimation result corresponding to the first signal and/or the channel estimation result corresponding to the second signal. This can resolve a problem caused because antenna panels corresponding to PFLs of different channels on the second apparatus side are not on a same antenna panel, so that the first measurement result calculated after the compensation operation is performed can be more accurate, thereby improving carrier aggregation positioning accuracy.

FIG. 3, FIG. 4, FIG. 5, FIG. 6A, and FIG. 6B are described by using an example in which the second apparatus sends a signal to the first apparatus. The solutions provided in embodiments of this application are also applicable to a solution in which the first apparatus sends a signal to the second apparatus. The following provides descriptions with reference to the accompanying drawings.

FIG. 7 is an example of a diagram of an architecture of a communication system. In FIG. 7, an example in which a first apparatus sends a signal to a second apparatus is used. A difference from FIG. 3 lies in that, in FIG. 7, the first apparatus sends at least one signal, and the at least one signal may include, for example, a third signal and a fourth signal. The second apparatus may receive the third signal by using a third ARP, and the second apparatus receives the fourth signal by using a fourth ARP. The third signal and the fourth signal may also be understood as signals on two aggregated CCs. The second apparatus may obtain a measurement result through measurement based on the third signal and the fourth signal. A process of determining the measurement result by the second apparatus is similar to the process of determining the measurement result by the first apparatus.

It can be learned that, because the third ARP and the fourth ARP on the second apparatus may not be on a same antenna panel, that is, there is a spacing between the third ARP and the fourth ARP, there is a distance difference between propagation paths of the third signal and the fourth signal. As a result, the third signal and the fourth signal pass through different channels, reducing accuracy of the measurement result.

Based on the foregoing problems, embodiments of this application provide a possible implementation. In this implementation, a second apparatus may determine a measurement result based on a spacing between a plurality of ARPs for receiving a plurality of signals, thereby improving measurement precision.

In the solutions provided in embodiments of this application, the third ARP may be the same as or different from the first ARP, and the fourth ARP may be the same as or different from the second ARP. For other content in FIG. 7, refer to the related descriptions in FIG. 3. Details are not described again.

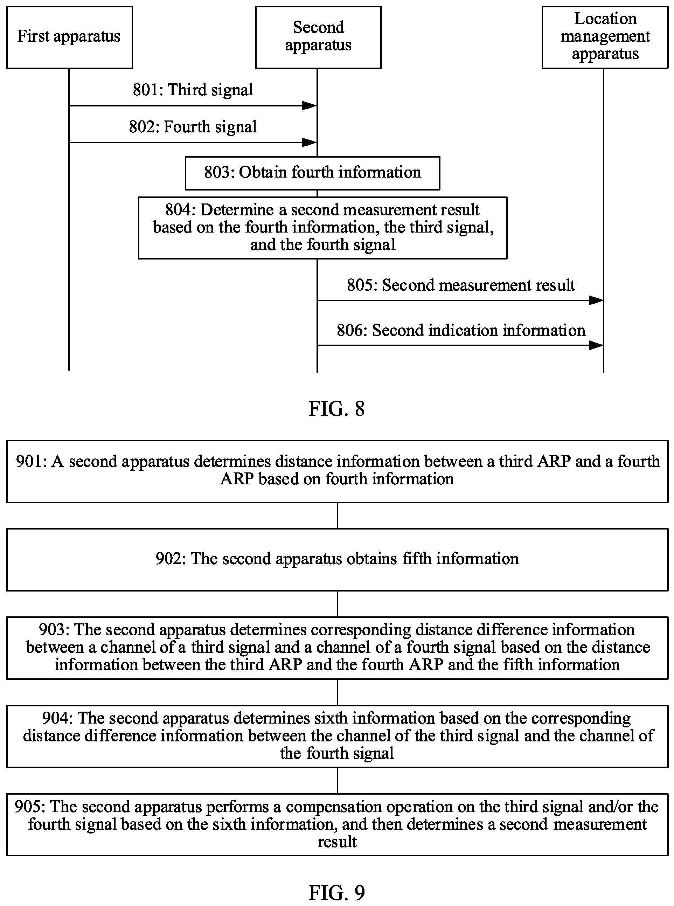

Based on the embodiments shown in FIG. 1, FIG. 2A, FIG. 2B, FIG. 2C, FIG. 2D, and FIG. 7 and the foregoing other content, FIG. 8 is an example of a schematic flowchart of a positioning method according to an embodiment of this application. The embodiment shown in FIG. 8 is described by using an example in which a first apparatus sends a signal to a second apparatus. The solution provided in FIG. 8 may be considered as a possible embodiment in the architecture of the communication system provided in FIG. 7. For the first apparatus, the second apparatus, and the location management apparatus in FIG. 8, refer to the related descriptions in FIG. 4. Details are not described again.

As shown in FIG. 8, the method may include step 801, step 802, and step 804. The method may further include step 803, step 805, and step 806. The following provides descriptions with reference to FIG. 8.

Step 801: The first apparatus sends a third signal.

Correspondingly, the second apparatus receives the third signal by using a third ARP.

Step 802: The first apparatus sends a fourth signal.

Correspondingly, the second apparatus receives the fourth signal by using a fourth ARP. The fourth ARP is different from the third ARP.

The third signal and the fourth signal may be SRSs or the like. For related examples, refer to the foregoing descriptions. Details are not described again.

In a possible implementation, the second apparatus may receive a request from the location management apparatus, and the request may be used to request the second apparatus to configure a resource for the first apparatus. The second apparatus configures the resource for the first apparatus based on the request, and sends information about the resource to the first apparatus, so that the first apparatus sends the third signal and the fourth signal based on the information about the resource. The resource includes a resource of the third signal and a resource of the fourth signal. The second apparatus may alternatively send the information about the resource to the location management apparatus. The location management apparatus may send the information about the resource to another apparatus (such as a neighboring base station) that is ready to measure the third signal and the fourth signal that are sent by the first apparatus, so that the another apparatus measures the third signal and the fourth signal based on the information about the resource. For a measurement solution of the another apparatus, refer to a solution in which the second apparatus determines a second measurement result. Details are not described again. The location management apparatus may further send a positioning measurement request to the second apparatus. After receiving the positioning measurement request, the second apparatus may receive the third signal and the fourth signal from the first apparatus.

For example, a time domain resource occupied by the third signal and a time domain resource occupied by the fourth signal may be the same (that is, may completely overlap), or may be different (for example, may partially overlap or may not overlap). A frequency domain resource occupied by the third signal and a frequency domain resource occupied by the fourth signal may be contiguous frequency domain resources in a frequency band (band), or may be frequency domain resources in different frequency bands (band), or may be two non-contiguous frequency domain resources in a same frequency band (band). In a possible implementation, a CC corresponding to the third signal and a CC corresponding to the fourth signal may be different, and may be understood as aggregated CCs. The third signal and the fourth signal may be sent through aggregation (aggregation). For related content of the third signal and the fourth signal, refer to the related descriptions of the first signal and the second signal. Details are not described again.

Step 803: The second apparatus obtains fourth information.

The fourth information includes information indicating a location of the third ARP and a location of the fourth ARP. The fourth information, the third signal, and the fourth signal are used to determine the second measurement result, and the second measurement result is used for positioning.

In step 803, the second apparatus may obtain the fourth information. For example, the second apparatus obtains the fourth information based on preconfigured information. Step 803 is an optional step, and may not be performed.

Step 804: The second apparatus determines the second measurement result based on the fourth information, the third signal, and the fourth signal.

The second measurement result is used to position the second apparatus. In this embodiment of this application, the second apparatus may compensate for the third signal and/or the fourth signal based on the fourth information, and then determine the second measurement result. The second apparatus may alternatively compensate for a channel estimation result of the third signal and/or a channel estimation result of the fourth signal based on the fourth information, and then determine the second measurement result.

There are a plurality of solutions for determining the second measurement result by the second apparatus. For example, the second apparatus may splice the third signal and the fourth signal into a signal with a larger bandwidth, and then measure the signal with a larger bandwidth, to obtain the second measurement result. It may also be understood that the second measurement result is determined based on a signal obtained by splicing the third signal and the fourth signal. Because a bandwidth of a signal is inversely correlated with an estimated error of a measurement result, this solution can improve estimation accuracy of the second measurement result, thereby improving positioning accuracy.

In another possible implementation, the second apparatus may splice a channel estimation result of the third signal and a channel estimation result of the fourth signal, to obtain a channel estimation result corresponding to a signal with a larger bandwidth. It may also be understood that the second measurement result is determined based on the channel estimation result corresponding to the signal with a larger bandwidth. Because a bandwidth of a signal is inversely correlated with an estimated error of a measurement result, this solution can improve estimation accuracy of the second measurement result, thereby improving positioning accuracy.

Step 805: The second apparatus sends the second measurement result.

Correspondingly, the location management apparatus receives the second measurement result.

Step 806: The second apparatus sends second indication information.

Correspondingly, the location management apparatus receives the second indication information. The second indication information indicates that the second measurement result is determined based on the fourth information. In this way, the location management apparatus may determine, based on the second indication information, that accuracy or reliability of the second measurement result is higher. Therefore, when the first apparatus is positioned, positioning may be performed based on the measurement result with higher accuracy or reliability, or a larger weight is set for the measurement result with higher accuracy or reliability, thereby improving positioning accuracy.

Step 805 and step 806 are optional steps, and step 805 and/or step 806 may not be performed. In a possible implementation, the first apparatus may send a plurality of signals, and the second apparatus may determine the second measurement result based on the plurality of signals. The plurality of signals may include at least the third signal and the fourth signal. In this embodiment of this application, an example in which the plurality of signals include the third signal and the fourth signal is used for description. When the plurality of signals include more signals, a related solution is similar thereto, and details are not described again.

Based on the embodiments shown in FIG. 1, FIG. 2A, FIG. 2B, FIG. 2C, FIG. 2D, FIG. 7, and FIG. 8 and the foregoing other content, FIG. 9 is an example of a schematic flowchart of a measurement result determining method according to an embodiment of this application. The embodiment shown in FIG. 9 may be considered as a possible implementation of step 804 in FIG. 8. For the first apparatus, the second apparatus, and the location management apparatus in FIG. 9, refer to the related descriptions in FIG. 8. Details are not described again. In FIG. 9, a solution in which the second apparatus determines the second measurement result is similar to the solution in which the first apparatus determines the first measurement result. For related content, refer to each other.

As shown in FIG. 9, the method may include step 901, step 902, step 903, step 904, and step 905. The following provides descriptions with reference to FIG. 9.

Step 901: The second apparatus determines distance information between the third ARP and the fourth ARP based on the fourth information.

The fourth information includes information indicating a location of the third ARP and a location of the fourth ARP.

The information indicating the location of the third ARP and the location of the fourth ARP includes at least one of the following: location information of the third ARP and location information of the fourth ARP; relative location information of the third ARP and the fourth ARP; distance information between the third ARP and the fourth ARP; or information indicating a distance between a fourth antenna panel and a third antenna panel. The third ARP corresponds to the third antenna panel of the second apparatus, and the fourth ARP corresponds to the fourth antenna panel of the second apparatus.

The information indicating the distance between the fourth antenna panel and the third antenna panel includes at least one of the following: location information of the third antenna panel and location information of the fourth antenna panel; relative location information between the third antenna panel and the fourth antenna panel; distance information between the fourth antenna panel and the third antenna panel; orientation information of the third antenna panel; orientation information of the fourth antenna panel; relative orientation information of the third antenna panel and the fourth antenna panel; contour information of the third antenna panel; or contour information of the fourth antenna panel.

The contour information of the third antenna panel includes at least one of shape information of the third antenna panel, size information of the third antenna panel, distance information between two antenna elements of the third antenna panel, or distance information between an antenna element of the third antenna panel and an edge of the third antenna panel. The contour information of the fourth antenna panel includes at least one of shape information of the fourth antenna panel, size information of the fourth antenna panel, distance information between two antenna elements of the fourth antenna panel, or distance information between an antenna element of the fourth antenna panel and an edge of the fourth antenna panel.

For related content of the information indicating the location of the third ARP and the location of the fourth ARP, refer to the related content of the information indicating the location of the first ARP and the location of the second ARP. In consideration of similarities, details are not described again.

In a possible implementation, the distance information between the third ARP and the fourth ARP may be determined based on at least one of the following (the following content may all be obtained based on the fourth information): a distance between the third ARP and the fourth ARP; a distance between an edge of the third antenna panel and an edge of the fourth antenna panel; a distance between an antenna element on an edge of the third antenna panel and an antenna element on an edge of the fourth antenna panel; a distance between an antenna element on an edge of the third antenna panel and an edge of the third antenna panel; a distance between an antenna element on an edge of the fourth antenna panel and an edge of the fourth antenna panel; a spacing between antenna elements on the third antenna panel; a spacing between antenna elements on the fourth antenna panel; a side length of the third antenna panel; or a side length of the fourth antenna panel.

For a method for determining the distance information between the third ARP and the fourth ARP, refer to the foregoing method for determining the distance information between the first ARP and the second ARP. Details are not described again.

Step 902: The second apparatus obtains fifth information.

The fifth information may include angle of departure information of a signal sent by the second apparatus to the first apparatus. The fifth information may also include angle of arrival information of a signal sent by the first apparatus to the second apparatus.

The fifth information in this embodiment of this application may be obtained by the second apparatus based on the received third signal and/or fourth signal. Alternatively, the fifth information may be obtained by the second apparatus based on historical experience.

Step 903: The second apparatus determines corresponding distance difference information between a channel of the third signal and a channel of the fourth signal based on the distance information between the third ARP and the fourth ARP and the fifth information.

For a manner of determining the corresponding distance difference information between the channel of the third signal and the channel of the fourth signal, refer to the foregoing manner of determining the corresponding distance difference information between the channel of the first signal and the channel of the second signal. Details are not described again.

For step 901 to step 903, refer to step 501 to step 503. Details are not described again.

Step 904: The second apparatus determines sixth information based on the corresponding distance difference information between the channel of the third signal and the channel of the fourth signal.

The sixth information includes a phase difference and/or a delay difference between a signal transmitted through the channel of the third signal and a signal transmitted through the channel of the fourth signal. This solution is similar to the solution in which the first apparatus determines the third information, and details are not described again.

Step 905: The second apparatus performs a compensation operation on the third signal and/or the fourth signal based on the sixth information, and then determines the second measurement result.

In step 905, the second apparatus may compensate for the channel estimation result corresponding to the third signal and/or the channel estimation result corresponding to the fourth signal, or may compensate for the third signal and/or the fourth signal.

For example, the second apparatus may separately compensate for the channel estimation result corresponding to the third signal and the channel estimation result corresponding to the fourth signal, and determine the second measurement result based on a compensated channel estimation result of the third signal and a compensated channel estimation result of the fourth signal. For example, for the third signal, the compensated channel estimation result of the third signal and the compensated channel estimation result of the fourth signal may be spliced to obtain a spliced channel estimation result, and the second measurement result is calculated based on the spliced channel estimation result.

For another example, the second apparatus may compensate for one of the channel estimation result corresponding to the third signal or the channel estimation result corresponding to the fourth signal. For example, the second apparatus compensates for the channel estimation result corresponding to the third signal, splices a compensated channel estimation result of the third signal and the uncompensated channel estimation result of the fourth signal to obtain a spliced channel estimation result, and calculate the second measurement result based on the spliced channel estimation result.

For another example, the second apparatus may separately compensate for the third signal and the fourth signal, splice a compensated third signal and a compensated fourth signal to obtain a spliced signal, and calculate the second measurement result based on the spliced signal.

For another example, the second apparatus may compensate for one of the third signal or the fourth signal. For example, the second apparatus compensates for the third signal, splices a compensated third signal and the uncompensated fourth signal to obtain a spliced signal, and calculates the second measurement result based on the spliced signal.

A related solution is similar to the solution provided in step 505, and details are not described again.

The solution provided in FIG. 9 provides the solution for determining the second measurement result based on the fourth information. It can be learned from the foregoing solution that, based on the fourth information, the second apparatus may compensate for the third signal and/or the fourth signal, and/or compensate for the channel estimation result corresponding to the third signal and/or the channel estimation result corresponding to the fourth signal. This can resolve a problem caused because antenna panels corresponding to CCs of different channels on the first apparatus side are not on a same antenna panel, so that the second measurement result calculated after the compensation operation is performed can be more accurate, thereby improving carrier aggregation positioning accuracy.

It may be understood that, to implement the functions in the foregoing embodiments, the first apparatus, the second apparatus, and the location management apparatus may include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

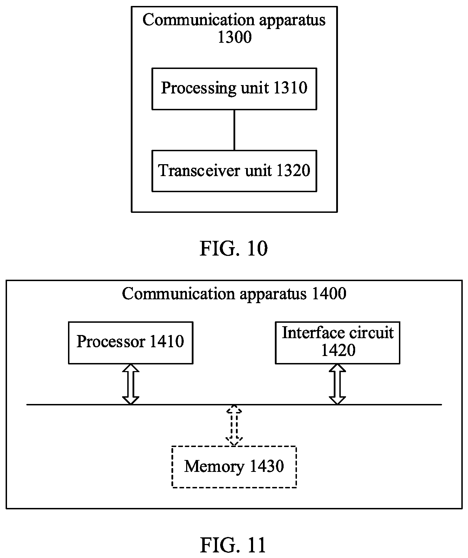

FIG. 10 and FIG. 11 are diagrams of possible structures of communication apparatuses according to embodiments of this application. These communication apparatuses may be configured to implement functions of the terminal or the base station in the foregoing method embodiments, and therefore can also achieve beneficial effects of the foregoing method embodiments. In embodiments of this application, the communication apparatus may be the terminal device shown in FIG. 1, FIG. 2A, FIG. 2B, or FIG. 2C, or may be the network device (for example, the RAN node) shown in FIG. 1, FIG. 2A, FIG. 2B, or FIG. 2C, or may be a chip system of the terminal device or the network device shown in FIG. 1, FIG. 2A, FIG. 2B, or FIG. 2C.

As shown in FIG. 10, the communication apparatus 1300 includes a processing unit 1310 and a transceiver unit 1320. The communication apparatus 1300 is configured to implement functions of the first apparatus, the second apparatus, or the location management apparatus in the method embodiment shown in FIG. 4, FIG. 5, FIG. 8, or FIG. 9.

When the communication apparatus 1300 is configured to implement the functions of the first apparatus in the method embodiment shown in FIG. 4 or FIG. 5, the processing unit 1310 is configured to: receive a first signal and a second signal by using the transceiver unit 1320, and determine a first measurement result based on first information, the first signal, and the second signal.

In a possible implementation, when the communication apparatus 1300 is configured to implement the functions of the first apparatus in the method embodiment shown in FIG. 4 or FIG. 5, the processing unit 1310 is further configured to perform a compensation operation on the first signal and/or the second signal based on the first information.

In a possible implementation, when the communication apparatus 1300 is configured to implement the functions of the first apparatus in the method embodiment shown in FIG. 4 or FIG. 5, the processing unit 1310 is further configured to determine the first measurement result based on at least one of the following: a channel estimation result of a compensated first signal and a channel estimation result of the second signal; a channel estimation result of the first signal and a channel estimation result of a compensated second signal; a channel estimation result of a compensated first signal and a channel estimation result of a compensated second signal; a compensated first signal and the second signal; the first signal and a compensated second signal; or a compensated first signal and a compensated second signal.

In a possible implementation, when the communication apparatus 1300 is configured to implement the functions of the first apparatus in the method embodiment shown in FIG. 4 or FIG. 5, the processing unit 1310 is further configured to: determine third information based on the first information; and perform the compensation operation on the first signal and/or the second signal based on the third information.

In a possible implementation, when the communication apparatus 1300 is configured to implement the functions of the first apparatus in the method embodiment shown in FIG. 4 or FIG. 5, the processing unit 1310 is further configured to: determine corresponding distance difference information between a channel of the first signal and a channel of the second signal based on the first information; and determine the third information based on the distance difference information.

In a possible implementation, when the communication apparatus 1300 is configured to implement the functions of the first apparatus in the method embodiment shown in FIG. 4 or FIG. 5, the processing unit 1310 is further configured to: determine distance information between a first ARP and a second ARP based on the first information; obtain second information; and determine the distance difference information based on the distance information and the second information.

In a possible implementation, when the communication apparatus 1300 is configured to implement the functions of the first apparatus in the method embodiment shown in FIG. 4 or FIG. 5, the processing unit 1310 is further configured to send the first measurement result by using the transceiver unit 1320.

In a possible implementation, when the communication apparatus 1300 is configured to implement the functions of the first apparatus in the method embodiment shown in FIG. 4 or FIG. 5, the processing unit 1310 is further configured to send first indication information by using the transceiver unit 1320.

In a possible implementation, when the communication apparatus 1300 is configured to implement the functions of the first apparatus in the method embodiment shown in FIG. 4 or FIG. 5, the processing unit 1310 is further configured to receive the first information by using the transceiver unit 1320.

When the communication apparatus 1300 is configured to implement the function of the second apparatus in the method embodiment shown in FIG. 4 or FIG. 5, the processing unit 1310 is configured to perform the following operations by using the transceiver unit 1320: sending a first signal by using a first antenna reference point ARP, sending a second signal by using a second ARP, and sending first information.

When the communication apparatus 1300 is configured to implement the functions of the location management apparatus in the method embodiment shown in FIG. 4 or FIG. 5, the processing unit 1310 is configured to: receive a first measurement result by using the transceiver unit 1320, and perform positioning based on the first measurement result.

In a possible implementation, when the communication apparatus 1300 is configured to implement the functions of the location management apparatus in the method embodiment shown in FIG. 4 or FIG. 5, the processing unit 1310 is further configured to receive first indication information by using the transceiver unit 1320.

When the communication apparatus 1300 is configured to implement the functions of the second apparatus in the method embodiment shown in FIG. 8 or FIG. 9, the processing unit 1310 is configured to: receive a third signal and a fourth signal by using the transceiver unit 1320, and determine a second measurement result based on fourth information, the third signal, and the fourth signal.

In a possible implementation, when the communication apparatus 1300 is configured to implement the functions of the second apparatus in the method embodiment shown in FIG. 8 or FIG. 9, the processing unit 1310 is further configured to perform a compensation operation on the third signal and/or the fourth signal based on the fourth information.

In a possible implementation, when the communication apparatus 1300 is configured to implement the functions of the second apparatus in the method embodiment shown in FIG. 8 or FIG. 9, the processing unit 1310 is further configured to: determine the second measurement result based on at least one of the following: a channel estimation result of a compensated third signal and a channel estimation result of the fourth signal; a channel estimation result of the third signal and a channel estimation result of a compensated fourth signal; a channel estimation result of a compensated third signal and a channel estimation result of a compensated fourth signal; a compensated third signal and the fourth signal; the third signal and a compensated fourth signal; or a compensated third signal and a compensated fourth signal.

In a possible implementation, when the communication apparatus 1300 is configured to implement the functions of the second apparatus in the method embodiment shown in FIG. 8 or FIG. 9, the processing unit 1310 is further configured to: determine sixth information based on the fourth information; and perform the compensation operation on the third signal and/or the fourth signal based on the sixth information.

In a possible implementation, when the communication apparatus 1300 is configured to implement the functions of the second apparatus in the method embodiment shown in FIG. 8 or FIG. 9, the processing unit 1310 is further configured to: determine corresponding distance difference information between a channel of the third signal and a channel of the fourth signal based on the fourth information; and determine the sixth information based on the distance difference information.

In a possible implementation, when the communication apparatus 1300 is configured to implement the functions of the second apparatus in the method embodiment shown in FIG. 8 or FIG. 9, the processing unit 1310 is further configured to: determine distance information between a third ARP and a fourth ARP based on the fourth information; obtain fifth information; and determine the distance difference information based on the distance information and the fifth information.

In a possible implementation, when the communication apparatus 1300 is configured to implement the functions of the second apparatus in the method embodiment shown in FIG. 8 or FIG. 9, the processing unit 1310 is further configured to send the second measurement result by using the transceiver unit 1320.

In a possible implementation, when the communication apparatus 1300 is configured to implement the functions of the second apparatus in the method embodiment shown in FIG. 8 or FIG. 9, the processing unit 1310 is further configured to send second indication information by using the transceiver unit 1320.

When the communication apparatus 1300 is configured to implement the functions of the location management apparatus in the method embodiment shown in FIG. 8 or FIG. 9, the processing unit 1310 is configured to: receive a second measurement result by using the transceiver unit 1320, and perform positioning based on the second measurement result.

In a possible implementation, when the communication apparatus 1300 is configured to implement the functions of the location management apparatus in the method embodiment shown in FIG. 8 or FIG. 9, the processing unit 1310 is further configured to receive second indication information by using the transceiver unit 1320.

For more detailed descriptions of the processing unit 1310 and the transceiver unit 1320, refer to the related descriptions in the method embodiment shown in FIG. 4, FIG. 5, FIG. 8, or FIG. 9.

As shown in FIG. 11, the communication apparatus 1400 includes a processor 1410 and an interface circuit 1420. The processor 1410 and the interface circuit 1420 are coupled to each other. It can be understood that the interface circuit 1420 may be a transceiver or an input/output interface. Optionally, the communication apparatus 1400 may further include a memory 1430, configured to: store instructions to be executed by the processor 1410, store input data required for running instructions by the processor 1410, or store data generated after the processor 1410 runs instructions.

When the communication apparatus 1400 is configured to implement the method shown in FIG. 4, FIG. 5, FIG. 8, or FIG. 9, the processor 1410 is configured to implement functions of the processing unit 1310, and the interface circuit 1420 is configured to implement functions of the transceiver unit 1320.

When the communication apparatus is a chip used in a terminal, the chip in the terminal implements the functions of the terminal apparatus in the foregoing method embodiments. That the chip in the terminal receives information from a base station may be understood as that the information is first received by another module (for example, a radio frequency module or an antenna) in the terminal, and then sent by these modules to the chip in the terminal. That the chip in the terminal sends information to a base station may be understood as that the information is first sent to another module (for example, a radio frequency module or an antenna) in the terminal, and then sent to the base station by these modules.

When the communication apparatus is a chip used in a base station, the chip in the base station implements the functions of the network apparatus in the foregoing method embodiments. That the chip in the base station receives information from a terminal may be understood as that the information is first received by another module (for example, a radio frequency module or an antenna) in the base station, and then sent by the module to the chip in the base station. That the chip in the base station sends information to a terminal may be understood as that the information is first sent to another module (for example, a radio frequency module or an antenna) in the base station, and then sent to the terminal by the module.

In this application, that an entity A sends information to an entity B may be that A directly sends the information to B, or may be that A indirectly sends the information to B via another entity. Similarly, that the entity B receives information from the entity A may be that the entity B directly receives information sent by the entity A, or may be that the entity B indirectly receives information sent by the entity A via another entity. The entity A and the entity B herein each may be a RAN node or a terminal, or may be a module in a RAN node or a terminal. Information sending and receiving may be information exchange between a RAN node and a terminal, for example, information exchange between a base station and a terminal. Information sending and receiving may alternatively be information exchange between two RAN nodes, for example, information exchange between a CU and a DU. Information sending and receiving may alternatively be information exchange between different modules in an apparatus, for example, information exchange between a chip in a terminal and another module in the terminal, or information exchange between a chip in a base station and another module in the base station.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor or the like.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a base station or a terminal. Certainly, the processor and the storage medium may exist in a base station or terminal as discrete components.

All or some of the foregoing embodiments may be implemented by using software, hardware, firmware, or any combination thereof. When software is used to implement the foregoing embodiments, all or a part of the foregoing embodiments may be implemented in a form of a computer program product. The computer program product includes one or more computer programs or instructions. When the computer program or the instructions are loaded and executed on a computer, all or some of procedures or functions in embodiments of this application are performed. The computer may be a general-purpose computer, a dedicated computer, a computer network, a network device, a user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium accessible by the computer, or a data storage device, like a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise specified or there is a logic conflict, terms and/or descriptions in different embodiments are consistent and may be mutually referenced, and technical features in different embodiments may be combined based on an internal logical relationship thereof to form a new embodiment.

In this application, at least one means one or more, and a plurality of means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects. "Including at least one of A, B, or C" may indicate: including A; including B; including C; including A and B; including A and C; including B and C; and including A, B, and C.

It may be understood that various numbers (for example, numeric numbers such as "first" and "second", or letter numbers such as "information A1", "implementation B1", and "information C1") in embodiments of this application are merely used for differentiation for ease of description, and are not intended to limit the scope of embodiments of this application. Sequence numbers of the foregoing processes do not mean an execution sequence, and the execution sequence of the processes should be determined based on functions and internal logic of the processes.

**Claims**

1.   A positioning method, wherein the method is applied to a first apparatus, and the method comprises:

receiving a first signal, wherein the first signal is sent by using a first antenna reference point ARP of a second apparatus;
receiving a second signal, wherein the second signal is sent by using a second ARP of the second apparatus, and the second ARP is different from the first ARP; and
determining a first measurement result based on first information, the first signal, and the second signal, wherein the first information comprises information indicating a location of the first ARP and a location of the second ARP, and the first measurement result is used for positioning.

2.   The method according to claim 1, wherein before determining the first measurement result, the method further comprises:
performing a compensation operation on the first signal and/or the second signal based on the first information.

3.   The method according to claim 2, wherein determining the first measurement result based on the first information, the first signal, and the second signal comprises:
determining the first measurement result based on at least one of the following:

a channel estimation result of a compensated first signal and a channel estimation result of the second signal;
a channel estimation result of the first signal and a channel estimation result of a compensated second signal;
a channel estimation result of a compensated first signal and a channel estimation result of a compensated second signal;
a compensated first signal and the second signal;
the first signal and a compensated second signal; or
a compensated first signal and a compensated second signal.

4.   The method according to claim 2 or 3, wherein performing the compensation operation on the first signal and/or the second signal based on the first information comprises:

determining third information based on the first information, wherein the third information comprises a phase difference and/or a delay difference between a signal transmitted through a channel of the first signal and a signal transmitted through a channel of the second signal; and
performing the compensation operation on the first signal and/or the second signal based on the third information.

5.   The method according to claim 4, wherein determining the third information based on the first information comprises:

determining corresponding distance difference information between the channel of the first signal and the channel of the second signal based on the first information; and
determining the third information based on the distance difference information.

6.   The method according to claim 5, wherein determining the corresponding distance difference information between the channel of the first signal and the channel of the second signal based on the first information comprises:

determining distance information between the first ARP and the second ARP based on the first information;
obtaining second information, wherein the second information comprises angle of arrival information of a signal sent by the first apparatus to the second apparatus, and/or angle of departure information of a signal sent by the second apparatus to the first apparatus; and

determining the distance difference information based on the distance information and the second information.

7. The method according to any one of claims 1 to 6, wherein the information indicating the location of the first ARP and the location of the second ARP comprises at least one of the following:

   location information of the first ARP and location information of the second ARP;
   relative location information of the first ARP and the second ARP;
   distance information between the first ARP and the second ARP; or
   information indicating a distance between a second antenna panel and a first antenna panel, wherein the first ARP corresponds to the first antenna panel of the second apparatus, and the second ARP corresponds to the second antenna panel of the second apparatus.

8. The method according to claim 7, wherein the information indicating the distance between the second antenna panel and the first antenna panel comprises at least one of the following:

   location information of the first antenna panel and location information of the second antenna panel;
   relative location information between the first antenna panel and the second antenna panel;
   distance information between the second antenna panel and the first antenna panel;
   orientation information of the first antenna panel;
   orientation information of the second antenna panel;
   relative orientation information of the first antenna panel and the second antenna panel;
   contour information of the first antenna panel; or
   contour information of the second antenna panel.

9. The method according to claim 8, wherein the contour information of the first antenna panel comprises at least one of shape information of the first antenna panel, size information of the first antenna panel, distance information between two antenna elements of the first antenna panel, or distance information between an antenna element of the first antenna panel and an edge of the first antenna panel; and
   the contour information of the second antenna panel comprises at least one of shape information of the second antenna panel, size information of the second antenna panel, distance information between two antenna elements of the second antenna panel, or distance information between an antenna element of the second antenna panel and an edge of the second antenna panel.

10. The method according to any one of claims 1 to 9, wherein

   a time domain resource occupied by the first signal is the same as a time domain resource occupied by the second signal; and/or
   a frequency domain resource occupied by the first signal and a frequency domain resource occupied by the second signal are contiguous frequency domain resources in a preset frequency band.

11. The method according to any one of claims 1 to 10, wherein the method further comprises:
   sending the first measurement result.

12. The method according to any one of claims 1 to 11, wherein the method further comprises:
   sending first indication information, wherein the first indication information indicates that the first measurement result is determined based on the first information.

13. The method according to any one of claims 1 to 12, wherein the method further comprises:
   receiving the first information.

14. A positioning method, wherein the method is applied to a second apparatus, and the method comprises:

   receiving a third signal from a first apparatus by using a third antenna reference point ARP;
   receiving a fourth signal from the first apparatus by using a fourth ARP, wherein the fourth ARP is different from the third ARP; and
   determining a second measurement result based on fourth information, the third signal, and the fourth signal, wherein the fourth information comprises information indicating a location of the third ARP and a location of the fourth ARP, and the second measurement result is used for positioning.

15. The method according to claim 14, wherein before determining the second measurement result, the method further comprises:
performing a compensation operation on the third signal and/or the fourth signal based on the fourth information.

16. The method according to claim 15, wherein determining the second measurement result based on the fourth information, the third signal, and the fourth signal comprises:
determining the second measurement result based on at least one of the following:

a channel estimation result of a compensated third signal and a channel estimation result of the fourth signal;
a channel estimation result of the third signal and a channel estimation result of a compensated fourth signal;
a channel estimation result of a compensated third signal and a channel estimation result of a compensated fourth signal;
a compensated third signal and the fourth signal;
the third signal and a compensated fourth signal; or
a compensated third signal and a compensated fourth signal.

17. The method according to claim 15 or 16, wherein performing the compensation operation on the third signal and/or the fourth signal based on the fourth information comprises:

determining sixth information based on the fourth information, wherein the sixth information comprises a phase difference and/or a delay difference between a signal transmitted through a channel of the third signal and a signal transmitted through a channel of the fourth signal; and
performing the compensation operation on the third signal and/or the fourth signal based on the sixth information.

18. The method according to claim 17, wherein determining the sixth information based on the fourth information comprises:

determining corresponding distance difference information between the channel of the third signal and the channel of the fourth signal based on the fourth information; and
determining the sixth information based on the distance difference information.

19. The method according to claim 18, wherein determining the corresponding distance difference information between the channel of the third signal and the channel of the fourth signal based on the fourth information comprises:

determining distance information between the third ARP and the fourth ARP based on the fourth information;
obtaining fifth information, wherein the fifth information comprises angle of arrival information of a signal sent by the first apparatus to the second apparatus, and/or angle of departure information of a signal sent by the second apparatus to the first apparatus; and
determining the distance difference information based on the distance information and the fifth information.

20. The method according to any one of claims 14 to 19, wherein the information indicating the location of the third ARP and the location of the fourth ARP comprises at least one of the following:

location information of the third ARP and location information of the fourth ARP;
relative location information of the third ARP and the fourth ARP;
distance information between the third ARP and the fourth ARP; or
information indicating a distance between a fourth antenna panel and a third antenna panel, wherein the third ARP corresponds to the third antenna panel of the second apparatus, and the fourth ARP corresponds to the fourth antenna panel of the second apparatus.

21. The method according to claim 20, wherein the information indicating the distance between the fourth antenna panel and the third antenna panel comprises at least one of the following: location information of the third antenna panel and location information of the fourth antenna panel;

relative location information between the third antenna panel and the fourth antenna panel;
distance information between the fourth antenna panel and the third antenna panel;
orientation information of the third antenna panel;
orientation information of the fourth antenna panel;

relative orientation information of the third antenna panel and the fourth antenna panel;
contour information of the third antenna panel; or
contour information of the fourth antenna panel.

22. The method according to claim 21, wherein the contour information of the third antenna panel comprises at least one of shape information of the third antenna panel, size information of the third antenna panel, distance information between two antenna elements of the third antenna panel, or distance information between an antenna element of the third antenna panel and an edge of the third antenna panel; and
the contour information of the fourth antenna panel comprises at least one of shape information of the fourth antenna panel, size information of the fourth antenna panel, distance information between two antenna elements of the fourth antenna panel, or distance information between an antenna element of the fourth antenna panel and an edge of the fourth antenna panel.

23. The method according to any one of claims 14 to 22, wherein

a time domain resource occupied by the third signal is the same as a time domain resource occupied by the fourth signal; and/or
a frequency domain resource occupied by the third signal and a frequency domain resource occupied by the fourth signal are contiguous frequency domain resources in a preset frequency band.

24. The method according to any one of claims 14 to 23, wherein the method further comprises:
sending the second measurement result.

25. The method according to any one of claims 14 to 24, wherein the method further comprises:
sending second indication information, wherein the second indication information indicates that the second measurement result is determined based on the fourth information.

26. A communication apparatus, comprising a module configured to perform the method according to any one of claims 1 to 13 or a module configured to perform the method according to any one of claims 14 to 25.

27. A communication apparatus, comprising a processor and an interface circuit, wherein the interface circuit is configured to receive a signal from another communication apparatus and transmit the signal to the processor, or send a signal from the processor to another communication apparatus, and the processor is configured to implement the method according to any one of claims 1 to 13 or the method according to any one of claims 14 to 25 through a logic circuit or by executing code instructions.

28. A communication apparatus, comprising a processor, wherein the processor is configured to implement the method according to any one of claims 1 to 13 or the method according to any one of claims 14 to 25 through a logic circuit or by executing code instructions.

29. A computer-readable storage medium, wherein the storage medium stores a computer program or instructions, and when the computer program or the instructions are executed by a communication apparatus, the method according to any one of claims 1 to 13 or the method according to any one of claims 14 to 25 is implemented.

30. A computer program product, wherein the computer program product stores a computer program, the computer program comprises program instructions, and when the program instructions are executed by a computer, the computer is enabled to perform the method according to any one of claims 1 to 13 or the method according to any one of claims 14 to 25.

FIG. 1

EP 4 770 141 A1

FIG. 2A

FIG. 2B

FIG. 2C

FIG. 2D

FIG. 3

401: Send a first signal by using a first ARP

402: Send a second signal by using a second ARP

403: Obtain first information

404: Determine a first measurement result based on the first information, the first signal, and the second signal

405: The first apparatus sends the first measurement result

406: The first apparatus sends first indication information

FIG. 4

501: A first apparatus determines distance information between a first ARP and a second ARP based on first information

502: The first apparatus obtains second information

503: The first apparatus determines corresponding distance difference information between a channel of a first signal and a channel of a second signal based on the distance information and the second information

504: The first apparatus determines third information based on the distance difference information

505: The first apparatus performs a compensation operation on the first signal and/or the second signal based on the third information, and then determines a first measurement result

FIG. 5

FIG. 6A

FIG. 6B

FIG. 7

First apparatus | Second apparatus | Location management apparatus

801: Third signal →

802: Fourth signal →

803: Obtain fourth information

804: Determine a second measurement result based on the fourth information, the third signal, and the fourth signal

805: Second measurement result →

806: Second indication information →

**FIG. 8**

901: A second apparatus determines distance information between a third ARP and a fourth ARP based on fourth information

902: The second apparatus obtains fifth information

903: The second apparatus determines corresponding distance difference information between a channel of a third signal and a channel of a fourth signal based on the distance information between the third ARP and the fourth ARP and the fifth information

904: The second apparatus determines sixth information based on the corresponding distance difference information between the channel of the third signal and the channel of the fourth signal

905: The second apparatus performs a compensation operation on the third signal and/or the fourth signal based on the sixth information, and then determines a second measurement result

**FIG. 9**

Communication apparatus
1300

Processing unit 1310

Transceiver unit 1320

FIG. 10

Communication apparatus 1400

Processor 1410

Interface circuit
1420

Memory 1430

FIG. 11

## INTERNATIONAL SEARCH REPORT

| International application No. |
| --- |
| **PCT/CN2024/115554** |

| | |
| --- | --- |
| **A.** | **CLASSIFICATION OF SUBJECT MATTER** |
| | H04W4/02(2018.01)i |

According to International Patent Classification (IPC) or to both national classification and IPC

| | |
| --- | --- |
| **B.** | **FIELDS SEARCHED** |

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

3GPP, CNTXT, ENTXTC, VEN: 载波聚合, 补偿, 到达时间差, 定位, 位置, 坐标, 第二, 两个, 多个, 几个, 天线参考点, 角度, 余弦, 距离, 路程, 差, 信号, 时隙, 时域, 资源, 相同, 时刻, 信道, 同时, 频带, 连续, CA, carrier aggregation, compensat+, TDOA, locat+, position+, two, second, several, ARP, Antenna Reference Point, angle, cos, distance, difference, signal, PRS, time slot, resource, same time, simultaneous, channel, frequency band, continuous

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X | CN 114223223 A (QUALCOMM INC.) 22 March 2022 (2022-03-22) description, paragraphs 97-132 | 1, 7-14, 20-30 |
| Y | CN 114223223 A (QUALCOMM INC.) 22 March 2022 (2022-03-22) description, paragraphs 97-132 | 2-6, 15-19 |
| Y | CN 114828195 A (DATANG MOBILE COMMUNICATIONS EQUIPMENT CO., LTD.) 29 July 2022 (2022-07-29) description, paragraphs 161-165 | 2-6, 15-19 |
| X | WO 2023004216 A1 (QUALCOMM INC.) 26 January 2023 (2023-01-26) description, paragraphs 88-132 | 1, 7-14, 20-30 |
| A | CN 114727221 A (HUAWEI TECHNOLOGIES CO., LTD.) 08 July 2022 (2022-07-08) entire document | 1-30 |
| A | CN 114080023 A (OPPO (CHONGQING) INTELLIGENT TECHNOLOGY CO., LTD.) 22 February 2022 (2022-02-22) entire document | 1-30 |

| ☑ Further documents are listed in the continuation of Box C. | ☑ See patent family annex. |
| --- | --- |

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **18 October 2024** | **14 November 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/115554**

| C. | DOCUMENTS CONSIDERED TO BE RELEVANT | |
|---|---|---|
| Category* | Citation of document, with indication, where appropriate, of the relevant passages | Relevant to claim No. |
| A | CN 111175696 A (HANGZHOU ULTRACEPTION TECHNOLOGY CO., LTD.) 19 May 2020 (2020-05-19)<br>entire document | 1-30 |

Form PCT/ISA/210 (second sheet) (July 2022)

**INTERNATIONAL SEARCH REPORT**
Information on patent family members

| International application No. |
| --- |
| **PCT/CN2024/115554** |

| Patent document cited in search report | | | Publication date (day/month/year) | Patent family member(s) | | | Publication date (day/month/year) |
| --- | --- | --- | --- | --- | --- | --- | --- |
| CN | 114223223 | A | 22 March 2022 | US | 2021051442 | A1 | 18 February 2021 |
| | | | | WO | 2021029997 | A1 | 18 February 2021 |
| | | | | KR | 20220045153 | A | 12 April 2022 |
| | | | | TW | 202110210 | A | 01 March 2021 |
| | | | | BR | 112022002119 | A2 | 12 April 2022 |
| | | | | IN | 202247003012 | A | 04 March 2022 |
| | | | | VN | 86308 | A | 25 May 2022 |
| CN | 114828195 | A | 29 July 2022 | WO | 2022152291 | A1 | 21 July 2022 |
| | | | | KR | 20230134141 | A | 20 September 2023 |
| | | | | EP | 4280720 | A1 | 22 November 2023 |
| | | | | CN | 114828195 | B | 13 February 2024 |
| | | | | US | 2024073852 | A1 | 29 February 2024 |
| | | | | EP | 4280720 | A4 | 14 August 2024 |
| | | | | JP | 2024504660 | A | 01 February 2024 |
| WO | 2023004216 | A1 | 26 January 2023 | IN | 202347079674 | A | 22 December 2023 |
| | | | | CN | 117643006 | A | 01 March 2024 |
| | | | | KR | 20240037229 | A | 21 March 2024 |
| | | | | BR | 112024000190 | A2 | 26 March 2024 |
| | | | | VN | 102184 | A | 25 April 2024 |
| | | | | EP | 4374529 | A1 | 29 May 2024 |
| CN | 114727221 | A | 08 July 2022 | WO | 2023179638 | A1 | 28 September 2023 |
| CN | 114080023 | A | 22 February 2022 | CN | 114080023 | B | 07 May 2024 |
| CN | 111175696 | A | 19 May 2020 | None | | | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311282447